# EUROPÄISCHE PATENTSCHRIFT

(11) **EP 3 678 215 B1**
(45) Veröffentlichungstag und Bekanntmachung des Hinweises auf die Patenterteilung: **24.07.2024**
(21) Anmeldenummer: 19150509.8
(22) Anmeldetag: 07.01.2019
(51) Int. Cl.: H01M 10/48, H01M 50/503, H01M 50/522, H01M 50/516, H01M 50/213

(54) **ZELLVERBINDERAUFBAU, AKKUPACK UND GARTEN- UND/ODER FORSTBEARBEITUNGSSYSTEM**
CELL CONNECTOR STRUCTURE, BATTERY PACK AND GARDENING AND/OR FORESTRY SYSTEM
STRUCTURE DE CONNECTEUR DE CELLULE, BLOC D'ACCUMULATEUR ET SYSTÈME DE TRAVAUX DE JARDINAGE ET / OU FORESTIERS

(43) Veröffentlichungstag der Anmeldung: 08.07.2020
(73) Patentinhaber: Andreas Stihl AG & Co. KG, 71336 Waiblingen (DE)
(72) Erfinder: Stübs, Gerhard, 71404 Korb (DE); Schenk, Sebastian, 73655 Plüderhausen (DE); Ehrler, Denis, 73249 Wernau (DE); Nordmann, Alexander, 70437 Stuttgart (DE); Kolb, Joachim, 71638 Ludwigsburg (DE)
(74) Vertreter: Patentanwälte Ruff, Wilhelm, Beier, Dauster & Partner mbB

(56) Entgegenhaltungen:
- WO-A1-2008/038916
- WO-A1-2016/171783
- US-A1- 2013 337 299

## Beschreibung

### ANWENDUNGSGEBIET UND STAND DER TECHNIK

Die Erfindung bezieht sich auf einen Zellverbinderaufbau für einen Akkupack zur Versorgung eines elektrisch angetriebenen Garten- und/oder Forstbearbeitungsgeräts mit elektrischer Antriebsleistung, auf einen Akkupack aufweisend einen solchen Zellverbinderaufbau und Akkumulatorzellen und auf ein Garten- und/oder Forstbearbeitungssystem aufweisend einen solchen Akkupack und ein elektrisch angetriebenes Garten- und/oder Forstbearbeitungsgerät.

Die US 2013/0337299 A1 offenbart eine Elektrizitätsspeichervorrichtung umfassend eine Mehrzahl von Elektrizitätsspeicherzellen, ein Gehäuse, welches die Elektrizitätsspeicherzellen speichert, eine Mehrzahl von leitenden Mitgliedern zum elektrischen Verbinden der Elektrizitätsspeicherzellen miteinander, eine Kontrollvorrichtung, welche die Elektrizitätsspeicherzellen kontrolliert, und Spannungsdetektionsleitungen zum elektrischen Verbinden der Elektrizitätsspeicherzellen mit der Kontrollvorrichtung. Das Gehäuse enthält mindestens ein Paar Seitenplatten gemacht aus Harz.

Die WO 2008/0038916 A1 offenbart ein Verbindungsmitglied zum elektrischen Verbinden einer Mehrzahl von Batteriezellen in einem Batteriepack, in welchem die Batteriezellen montiert sind, wobei das Verbindungsmitglied mindestens zwei Terminalkontaktteile enthält, welche mit Elektrodenterminals benachbarter Batteriezellen verbunden sind, und ein Verbindungsteil zum Verbinden der Terminalkontaktteile, und wobei die Terminalkontaktteile in einer Höhe um eine Größe korrespondierend zu einer Dicke eines Packgehäuses niedriger sind als der Verbindungsteil, so dass das Verbindungsmitglied die Elektrodenterminals der Batteriezellen verbindet, während das Verbindungsmitglied an der Außenfläche des Packgehäuses montiert ist, und einen Batteriepack diesen enthaltend. Konsequenterweise hat das Verbindungsmitglied entsprechend den Effekt eines effektiven Verbindens der Elektrodenterminals der Batteriezellen durch einen einfachen Montageprozess. Auch kann das Verbindungsmitglied entsprechend an dem Packgehäuse ohne Verwendung eines zusätzlichen Hilfsmitglieds direkt montiert sein.

### AUFGABE UND LÖSUNG

Der Erfindung liegt als Aufgabe die Bereitstellung eines Zellverbinderaufbaus für einen Akkupack zur Versorgung eines elektrisch angetriebenen Garten- und/oder Forstbearbeitungsgeräts mit elektrischer Antriebsleistung, wobei der Zellverbinderaufbau eine gute, insbesondere einfache, Montage ermöglicht, eines Akkupacks aufweisend einen solchen Zellverbinderaufbau und Akkumulatorzellen und eines Garten- und/oder Forstbearbeitungssystems aufweisend einen solchen Akkupack und ein elektrisch angetriebenes Garten- und/oder Forstbearbeitungsgerät zugrunde.

Die Erfindung löst diese Aufgabe durch die Bereitstellung eines Zellverbinderaufbaus mit den Merkmalen des Anspruchs 1, eines Akkupacks mit den Merkmalen des Anspruchs 13 und eines Garten- und/oder Forstbearbeitungssystems mit den Merkmalen des Anspruchs 15. Vorteilhafte Weiterbildungen der Erfindung sind in den abhängigen Ansprüchen beschrieben.

Der erfindungsgemäße Zellverbinderaufbau ist für einen Akkupack zur Versorgung eines elektrisch angetriebenen Garten- und/oder Forstbearbeitungsgeräts mit elektrischer Antriebsleistung ausgebildet beziehungsweise konfiguriert. Der Zellverbinderaufbau weist eine Mehrzahl von Zellverbindern, mindestens ein Zellverbinderelement, insbesondere Zellverbindervormontageelement, eine Mehrzahl von Spannungsabgriffelementen, insbesondere Mittelspannungsabgriffelementen, und mindestens einen Abgriffelementkörper, insbesondere einen Abgriffelementvormontagekörper, auf. Die Zellverbinder sind zur elektrischen Verbindung von, insbesondere einer Mehrzahl von, Akkumulatorzellen, insbesondere miteinander, ausgebildet beziehungsweise konfiguriert. Des Weiteren sind die Zellverbinder und das mindestens eine Zellverbinderelement zur, insbesondere unmittelbaren, Anordnung aneinander und zur, insbesondere unmittelbaren, Sicherung gegen Lösen voneinander, insbesondere bei beziehungsweise zeitlich nach Anordnung aneinander, ausgebildet beziehungsweise konfiguriert. Die Spannungsabgriffelemente weisen Spannungsabgriffkabel auf. Die Spannungsabgriffkabel sind zur, insbesondere unmittelbaren oder mittelbaren, elektrischen Verbindung mit den Zellverbindern ausgebildet beziehungsweise konfiguriert. Außerdem sind die Spannungsabgriffelemente und der mindestens eine Abgriffelementkörper zur, insbesondere unmittelbaren, Anordnung aneinander und zur, insbesondere unmittelbaren, Sicherung gegen Lösen voneinander, insbesondere bei beziehungsweise zeitlich nach Anordnung aneinander, ausgebildet beziehungsweise konfiguriert. Das mindestens eine Zellverbinderelement mit den, insbesondere angeordneten und gesicherten beziehungsweise vormontierten, Zellverbindern und der mindestens eine Abgriffelementkörper mit den, insbesondere angeordneten und gesicherten beziehungsweise vormontierten, Spannungsabgriffelementen sind zur, insbesondere unmittelbaren, mechanischen Verbindung miteinander ausgebildet beziehungsweise konfiguriert. Die Spannungsabgriffelemente und der mindestens eine Abgriffelementkörper sind verschieden.

Dies, insbesondere die Unterteilung des Zellverbinderaufbaus in die oben beschriebenen, insbesondere zeitlich vor einer Montage getrennten, Komponenten, ermöglicht eine einfache Montage des Zellverbinderaufbaus. Insbesondere braucht der Zellverbinderaufbau nicht in komplexen Schritten montiert zu werden. Beispielsweise brauchen nicht die Zellverbinder und die Mittelspannungsabgriffelemente entweder an dem mindestens einen Zellverbinderelement oder dem mindestens einen Abgriffelementkörper unmittelbar angeordnet und gesichert beziehungsweise montiert zu werden. Insbesondere brauchen die Zellverbinder und der mindestens eine Abgriffelementkörper nicht zur, insbesondere unmittelbaren, Anordnung aneinander und zur, insbesondere unmittelbaren, Sicherung gegen Lösen voneinander ausgebildet sein. Zusätzlich oder alternativ brauchen die Spannungsabgriffelemente und das mindestens eine Zellverbinderelement nicht zur, insbesondere unmittelbaren, Anordnung aneinander und zur, insbesondere unmittelbaren, Sicherung gegen Lösen voneinander ausgebildet sein.

Zusätzlich oder alternativ ermöglicht dies, insbesondere die Unterteilung des Zellverbinderaufbaus in die oben beschriebenen, insbesondere zeitlich vor einer Montage getrennten, Komponenten, einen hohen Automatisierungsgrad bei der Montage des Zellverbinderaufbaus.

Weiter zusätzlich oder alternativ ermöglicht die Anordnung und die Sicherung beziehungsweise die Vormontage der Zellverbinder an dem mindestens einen Zellverbinderelement und/oder der Spannungsabgriffelemente an dem mindestens einen Abgriffelementkörper eine, insbesondere automatische, Prüfung auf Korrektheit, insbesondere zeitlich vor der mechanischen Verbindung des mindestens einen Zellverbinderelements mit den Zellverbindern und des mindestens einen Abgriffelementkörpers mit den Spannungsabgriffelementen und somit in einem unkritischen Montagezustand.

Weiter zusätzlich oder alternativ ermöglicht dies, insbesondere die Sicherung der Zellverbinder an dem mindestens einen Zellverbinderelement und/oder der Spannungsabgriffelemente an dem mindestens einen Abgriffelementkörper, im Falle eines Defekts, insbesondere zeitlich nach der mechanischen Verbindung des mindestens einen Zellverbinderelements mit den Zellverbindern und des mindestens einen Abgriffelementkörpers mit den Spannungsabgriffelementen, dass ein von dem Defekt betroffener Zellverbinder und/oder ein von dem Defekt betroffenes Spannungsabgriffelement sich nirgends kritisches hinbewegen kann. Dies kann ermöglichen, einen kritischen Zustand verursacht durch einen, insbesondere den, Defekt des Zellverbinderaufbaus zu vermeiden.

Insbesondere kann das mindestens eine Zellverbinderelement zur, insbesondere unmittelbaren, Aufnahme, insbesondere einer Mehrzahl, der Zellverbinder, insbesondere vollständig, und zur, insbesondere unmittelbaren, Sicherung der aufgenommenen Zellverbinder gegen Lösen von dem Zellverbinderelement ausgebildet sein.

Zusätzlich oder alternativ kann der mindestens eine Abgriffelementkörper zur, insbesondere unmittelbaren, Aufnahme, insbesondere einer Mehrzahl, der Spannungsabgriffelemente, insbesondere teilweise beziehungsweise abschnittsweise, und zur, insbesondere unmittelbaren, Sicherung der aufgenommenen Spannungsabgriffelemente gegen Lösen von dem Abgriffelementkörper ausgebildet sein.

Weiter zusätzlich oder alternativ kann das mindestens eine Zellverbinderelement zur, insbesondere unmittelbaren, Aufnahme des mindestens einen Abgriffelementkörpers und zur, insbesondere unmittelbaren, Sicherung des aufgenommenen Abgriffelementkörpers gegen Lösen von dem Zellhalterelement ausgebildet sein.

Weiter zusätzlich oder alternativ können die Zellverbinder, insbesondere jeweils, zur elektrischen Reihen- und/oder Parallelschaltung von Akkumulatorzellen ausgebildet sein.

Weiter zusätzlich oder alternativ können, insbesondere jeweils, einer oder mehrere der Zellverbinder und eines oder mehrere der Spannungsabgriffelemente, insbesondere Spannungsabgriffkabel, einander zugeordnet sein.

Weiter zusätzlich oder alternativ können die Spannungsabgriffkabel zur elektrischen Verbindung mit den Zellverbindern abisolierte Kabelenden aufweisen. Zusätzlich oder alternativ können die Spannungsabgriffelemente an die Spannungsabgriffkabel, insbesondere elektrisch, anschließende Kontaktelemente zur elektrischen Verbindung mit den Zellverbindern aufweisen.

Weiter zusätzlich oder alternativ können die Spannungsabgriffkabel mit den Zellverbindern durch die mechanische Verbindung des mindestens einen Zellverbinderelements und des mindestens einen Abgriffelementkörpers miteinander, insbesondere automatisch, elektrisch verbunden sein. Insbesondere können die Spannungsabgriffkabel und/oder die Kontaktelemente, soweit vorhanden, die Zellverbinder elektrisch kontaktieren, insbesondere durch Berührung.

Weiter zusätzlich oder alternativ kann der mindestens eine Abgriffelementkörper formstabil beziehungsweise starr, insbesondere im Vergleich zu den Spannungsabgriffkabeln, sein. Zusätzlich oder alternativ kann der Abgriffelementkörper als Leiste bezeichnet werden.

Die Spannungsabgriffelemente, insbesondere jeweils, und der mindestens eine Abgriffelementkörper sind zur Schnappverbindung miteinander ausgebildet.

Dies ermöglicht eine einfache, insbesondere werkzeugfreie, Montage.

In einer Weiterbildung der Erfindung sind die Zellverbinder und das mindestens eine Zellverbinderelement zur räumlich getrennten Positionierung der Zellverbinder an dem mindestens einen Zellverbinderelement und zur Positionssicherung der positionierten Zellverbinder ausgebildet beziehungsweise konfiguriert. Zusätzlich oder alternativ sind die Spannungsabgriffelemente, insbesondere die Kontaktelemente, soweit vorhanden, und der mindestens eine Abgriffelementkörper zur räumlich getrennten Positionierung der Spannungsabgriffelemente, insbesondere der Kontaktelemente, soweit vorhanden, an dem mindestens einen Abgriffelementkörper und zur Positionssicherung der positionierten Spannungsabgriffelemente, insbesondere der Kontaktelemente, soweit vorhanden, ausgebildet beziehungsweise konfiguriert. Dies ermöglicht die elektrische Verbindung von verschiedenen Akkumulatorzellen. Zusätzlich oder alternativ ermöglicht dies die Zuordnung der Zellverbinder und der Spannungsabgriffelemente, insbesondere Spannungsabgriffkabel und/oder Kontaktelemente, soweit vorhanden, zueinander, insbesondere bei beziehungsweise zeitlich nach der mechanischen Verbindung des mindestens einen Zellverbinderelements und des mindestens einen Abgriffelementkörpers. Insbesondere kann das mindestens eine Zellverbinderelement zur räumlich getrennten Positionierung der Zellverbinder und zur Positionssicherung der positionierten Zellverbinder ausgebildet sein. Zusätzlich oder alternativ kann der mindestens eine Abgriffelementkörper zur räumlich getrennten Positionierung der Spannungsabgriffelemente und zur Positionssicherung der positionierten Spannungsabgriffelemente ausgebildet sein.

In einer Weiterbildung der Erfindung sind Kabelenden der Spannungsabgriffkabel zueinander fest räumlich angeordnet, insbesondere mittels mindestens eines Steckverbinders und/oder wobei die Spannungsabgriffkabel teilweise oder vollständig mindestens ein, insbesondere farbcodiertes, Flachbandkabel bilden. Dies ermöglicht die, insbesondere automatische, Prüfung auf Korrektheit, insbesondere der Anordnung der Spannungsabgriffelemente, insbesondere der Kontaktelemente, soweit vorhanden, an dem mindestens einen Abgriffelementkörper. In anderen Worten: die Kabelenden können gebündelt sein, insbesondere zu einem Kabelbaum. Insbesondere können die Kabelenden den abisolierten Kabelenden und/oder den Kontaktelementen, soweit vorhanden, und/oder bei der mechanischen Verbindung des mindestens einen Zellverbinderelements und des mindestens einen Abgriffelementkörpers den Zellverbindern gegenüberliegend beziehungsweise abgewandt sein.

In einer Weiterbildung der Erfindung weist der Zellverbinderaufbau ein vorderseitiges Zellverbinderelement, ein rückseitiges Zellverbinderelement, mindestens einen vorderseitigen Abgriffelementkörper und mindestens einen rückseitigen Abgriffelementkörper auf. Das vorderseitige Zellverbinderelement und der mindestens eine vorderseitige Abgriffelementkörper sind zur, insbesondere unmittelbaren, mechanischen Verbindung miteinander ausgebildet beziehungsweise konfiguriert. Das rückseitige Zellverbinderelement und der mindestens eine rückseitige Abgriffelementkörper sind zur, insbesondere unmittelbaren, mechanischen Verbindung miteinander ausgebildet beziehungsweise konfiguriert. Des Weiteren sind das vorderseitige Zellverbinderelement und das rückseitige Zellverbinderelement verschieden zur Vermeidung einer seitenfalschen Verbindung ausgebildet beziehungsweise konfiguriert beziehungsweise geformt. Zusätzlich oder alternativ sind der mindestens eine vorderseitige Abgriffelementkörper und der mindestens eine rückseitige Abgriffelementkörper verschieden zur Vermeidung einer seitenfalschen Verbindung ausgebildet beziehungsweise konfiguriert beziehungsweise geformt.

Zusätzlich oder alternativ ist ein Spannungsabgriffkabel länger als ein anderes Spannungsabgriffkabel, insbesondere entweder, zur Vermeidung einer falschen Anordnung eines entfernten Spannungsabgriffelements, insbesondere Kontaktelements, soweit vorhanden, und eines nahen Spannungsabgriffelements, insbesondere Kontaktelements, soweit vorhanden, an dem Abgriffelementkörper oder zur Vermeidung einer falschen Verbindung eines entfernten Abgriffelementkörpers und eines nahen Abgriffelementkörpers mit dem Zellverbinderelement ausgebildet beziehungsweise konfiguriert.

Dies ermöglicht ein Risiko einer Falschmontage zu verringern oder sogar zu vermeiden.

Insbesondere brauchen das vorderseitige Zellverbinderelement und der mindestens eine rückseitige Abgriffelementkörper nicht zur, insbesondere unmittelbaren, mechanischen Verbindung miteinander ausgebildet sein. Zusätzlich oder alternativ brauchen das rückseitige Zellverbinderelement und der mindestens eine vorderseitige Abgriffelementkörper nicht zur, insbesondere unmittelbaren, mechanischen Verbindung miteinander ausgebildet sein.

In einer Weiterbildung der Erfindung sind die Zellverbinder Zellverbinderbleche.

Zusätzlich oder alternativ weisen die Spannungsabgriffelemente Kontaktzungen auf.

Dies ermöglicht eine einfache Herstellung der Zellverbinder und/oder der Spannungsabgriffelemente und/oder eine einfache Herstellung der elektrischen Verbindung, insbesondere der Zellverbinder und der Spannungsabgriffelemente, insbesondere der Spannungsabgriffkabel.

Insbesondere können die Kontaktelemente, soweit vorhanden, Kontaktzungen sein.

In einer Weiterbildung der Erfindung sind/ist die Zellverbinder und/oder das mindestens eine Zellverbinderelement und/oder die Spannungsabgriffelemente und/oder der mindestens eine Abgriffelementkörper derart ausgebildet beziehungsweise konfiguriert, insbesondere weist der Abgriffelementkörper Aussparungen, insbesondere Fenster, für mindestens Teile der Spannungsabgriffelemente auf, dass bei beziehungsweise zeitlich nach mechanischer Verbindung des mindestens einen Zellverbinderelements mit den Zellverbindern und des mindestens einen Abgriffelementkörpers mit den Spannungsabgriffelementen die Spannungsabgriffelemente mindestens teilweise über, insbesondere auf, den Zellverbindern in einer Richtung von außen nach innen, insbesondere des Zellhalteraufbaus und/oder des Zellverbinderelements, angeordnet sind und von außen für eine, insbesondere stoffschlüssige, Verbindung, insbesondere eine Schweißverbindung, mit den Zellverbindern zugänglich sind. Dies ermöglicht eine einfache Herstellung der elektrischen Verbindung, insbesondere der Zellverbinder und der Spannungsabgriffelemente, insbesondere der Spannungsabgriffkabel.

Insbesondere können die Teile der Spannungsabgriffelemente die Kontaktelemente sein, soweit vorhanden.

In einer Weiterbildung der Erfindung sind/ist das mindestens eine Zellverbinderelement und/oder die Zellverbinder zur, insbesondere formschlüssigen, Sicherung der Spannungsabgriffelemente, insbesondere der Kontaktelemente, soweit vorhanden, gegen Lösen von dem Abgriffelementkörper bei beziehungsweise zeitlich nach mechanischer Verbindung des Zellverbinderelements mit den Zellverbindern und des Abgriffelementkörpers mit den Spannungsabgriffelementen ausgebildet beziehungsweise konfiguriert. Dies ermöglicht eine zusätzlich Sicherung. Anders formuliert: die Spannungsabgriffelemente und der mindestens eine Abgriffelementkörper können oder brauchen nicht zur Anordnung aneinander bei beziehungsweise zeitlich nach mechanischer Verbindung des Zellverbinderelements und des Abgriffelementkörpers, insbesondere ohne Spannungsabgriffelemente, ausgebildet sein. Zusätzlich oder alternativ können oder brauchen die Zellverbinder und das mindestens eine Zellverbinderelement nicht zur Anordnung aneinander bei beziehungsweise zeitlich nach mechanischer Verbindung des Zellverbinderelements, insbesondere ohne Zellverbinder, und des Abgriffelementkörpers ausgebildet sein.

In einer Weiterbildung der Erfindung ist das mindestens eine Zellverbinderelement zum, insbesondere unmittelbaren, Halten von, insbesondere einer Mehrzahl von, Akkumulatorzellen, insbesondere Rundzellen, an mindestens einer Zellseite, insbesondere einer Zellumfangsseite, ausgebildet beziehungsweise konfiguriert. Die Zellverbinder sind an dem Zellverbinderelement im Bereich der Akkumulatorzellen, insbesondere an einer Zellstirnseite, beim Halten der Akkumulatorzellen gesichert. Zusätzlich oder alternativ ist der mindestens eine Abgriffelementkörper mit dem Zellverbinderelement im Bereich der Akkumulatorzellen, insbesondere an einer Zellstirnseite, beim Halten der Akkumulatorzellen mechanisch verbunden. Insbesondere können die Zellverbinder die Akkumulatorzellen, insbesondere unmittelbar, elektrisch kontaktieren, insbesondere durch Berührung, beim Halten der Akkumulatorzellen. Zusätzlich oder alternativ kann das mindestens eine Zellverbinderelement als Zellhalterelement bezeichnet werden. Weiter zusätzlich oder alternativ kann der Zellverbinderaufbau als Zellhalteraufbau bezeichnet werden.

In einer Weiterbildung der Erfindung ist das mindestens eine Zellverbinderelement zur Anordnung, insbesondere Aufnahme, von, insbesondere einer Mehrzahl von, Akkumulatorzellen, insbesondere Rundzellen, in einer Richtung von innen nach außen, insbesondere des Zellhalteraufbaus und/oder des Zellverbinderelements, auf einer Innenseite des Zellverbinderelements ausgebildet beziehungsweise konfiguriert. Das mindestens eine Zellverbinderelement ist zur Anordnung, insbesondere Aufnahme, der Zellverbinder und/oder des mindestens einen Abgriffelementkörpers mit den Spannungsabgriffelementen in einer, insbesondere entgegengesetzten, Richtung von außen nach innen, insbesondere des Zellhalteraufbaus und/oder des Zellverbinderelements, auf einer der Innenseite gegenüberliegenden beziehungsweise abgewandten Außenseite des Zellverbinderelements ausgebildet beziehungsweise konfiguriert. Dies ermöglicht eine Montage der Akkumulatorzellen unabhängig von einer Montage der Zellverbinder und/oder des mindestens einen Abgriffelementkörpers.

In einer Weiterbildung der Erfindung sind die Zellverbinder, insbesondere jeweils, einstückig und/oder elektrisch leitend ausgebildet beziehungsweise konfiguriert.

Zusätzlich oder alternativ ist das mindestens eine Zellverbinderelement einstückig und/oder elektrisch isolierend ausgebildet beziehungsweise konfiguriert.

Zusätzlich oder alternativ sind die Spannungsabgriffelemente, insbesondere jeweils, einstückig und/oder elektrisch leitend ausgebildet beziehungsweise konfiguriert.

Zusätzlich oder alternativ ist der mindestens eine Abgriffelementkörper einstückig und/oder elektrisch isolierend ausgebildet beziehungsweise konfiguriert.

In einer Weiterbildung der Erfindung sind die Zellverbinder, insbesondere jeweils, und das mindestens eine Zellverbinderelement zur formschlüssigen Verbindung, insbesondere Schnappverbindung, miteinander ausgebildet beziehungsweise konfiguriert.

Zusätzlich oder alternativ sind das mindestens eine Zellverbinderelement mit den Zellverbindern und der mindestens eine Abgriffelementkörper mit den Spannungsabgriffelementen zur formschlüssigen Verbindung, insbesondere Schnappverbindung, miteinander ausgebildet beziehungsweise konfiguriert.

Dies ermöglicht eine einfache, insbesondere werkzeugfreie, Montage.

In einer Weiterbildung der Erfindung weist der Zellverbinderaufbau mindestens ein weiteres Kabel, insbesondere ein Temperatursensor-Kabel, auf. Das mindestens eine weitere Kabel und das mindestens eine Zellverbinderelement sind zur Anordnung aneinander ausgebildet beziehungsweise konfiguriert. Das mindestens eine Zellverbinderelement und der mindestens eine Abgriffelementkörper sind zur, insbesondere formschlüssigen, Sicherung des angeordneten mindestens einen weiteren Kabels gegen Lösen von dem Zellverbinderelement bei beziehungsweise zeitlich nach mechanischer Verbindung des Zellverbinderelements und des Abgriffelementkörpers ausgebildet beziehungsweise konfiguriert. Insbesondere kann das mindestens eine Zellverbinderelement zur, insbesondere unmittelbaren, Aufnahme, des mindestens einen weiteren Kabels, insbesondere teilweise beziehungsweise abschnittsweise, ausgebildet sein.

Der erfindungsgemäße Akkupack zur Versorgung eines elektrisch angetriebenen Garten- und/oder Forstbearbeitungsgeräts mit elektrischer Antriebsleistung weist einen, insbesondere den, Zellverbinderaufbau wie zuvor beschrieben und, insbesondere eine Mehrzahl von, Akkumulatorzellen, insbesondere Rundzellen, auf.

Insbesondere kann der Akkupack eine Masse von maximal 20 Kilogramm (kg), insbesondere von maximal 10 kg, insbesondere von maximal 5 kg, aufweisen. Zusätzlich oder alternativ können die Akkumulatorzellen jeweils einzelne wiederaufladbare Speicherelemente für elektrische Energie auf elektrochemischer Basis sein. Weiter zusätzlich oder alternativ können die Akkumulatorzellen Lithium-Ionen-Akkumulatorzellen sein. Weiter zusätzlich oder alternativ können die Akkumulatorzellen gleich, insbesondere typ- und/oder baugleich, sein. Weiter zusätzlich oder alternativ kann eine, insbesondere jeweilige, Länge der Rundzellen größer als ein, insbesondere jeweiliger, Durchmesser der Rundzellen sein. Weiter zusätzlich oder alternativ können die Zellverbinder mit den Akkumulatorzellen, insbesondere unmittelbar, elektrisch verbunden sein, insbesondere durch eine stoffschlüssige Verbindung, insbesondere eine Schweißverbindung.

In einer Weiterbildung der Erfindung weist der Akkupack einen Messelektronikteil auf. Der Messelektronikteil ist zur elektrischen Verbindung mit den Akkumulatorzellen mittels der Zellverbinder und der Spannungsabgriffelemente, insbesondere der Spannungsabgriffkabel, zur, insbesondere automatischen, Messung von Spannungen, insbesondere von Mittelspannungen, insbesondere Spannungswerten, von den Akkumulatorzellen ausgebildet beziehungsweise konfiguriert. Insbesondere kann der Messelektronikteil mindestens einen weiteren Steckverbinder zur elektrischen Verbindung, insbesondere mit dem mindestens einen Steckverbinder, soweit vorhanden, aufweisen. Zusätzlich oder alternativ kann der Messelektronikteil zur, insbesondere automatischen, Abschaltung des Akkupacks, insbesondere der Versorgung mit elektrischer Antriebsleistung des Garten- und/oder Forstbearbeitungsgeräts, bei Überschreitung eines Spannungsobergrenzwerts und/oder bei Unterschreitung eines Spannungsuntergrenzwerts durch die gemessene Spannung, insbesondere bei einem Problemfall, ausgebildet beziehungsweise konfiguriert sein.

Das erfindungsgemäße Garten- und/oder Forstbearbeitungssystem weist einen, insbesondere den, Akkupack wie zuvor beschrieben und ein elektrisch angetriebenes Garten- und/oder Forstbearbeitungsgerät auf. Der Akkupack und das elektrisch angetriebene Garten- und/oder Forstbearbeitungsgerät sind zur elektrischen Verbindung miteinander zur, insbesondere automatischen, Versorgung des elektrisch angetriebenen Garten- und/oder Forstbearbeitungsgeräts mit elektrischer Antriebsleistung von dem Akkupack ausgebildet beziehungsweise konfiguriert.

Insbesondere kann das Garten- und/oder Forstbearbeitungsgerät einen Elektroantriebsmotor aufweisen. Zusätzlich oder alternativ kann das Garten- und/oder Forstbearbeitungsgerät ein handgeführtes, insbesondere handgetragenes oder bodengeführtes, Garten- und/oder Forstbearbeitungsgerät sein. Insbesondere handgeführtes, insbesondere handgetragenes, Garten- und/oder Forstbearbeitungsgerät kann bedeuten, dass das Garten- und/oder Forstbearbeitungsgerät eine Masse von maximal 50 kg, insbesondere von maximal 20 kg, insbesondere von maximal 10 kg, aufweisen kann. Weiter zusätzlich oder alternativ können der Akkupack und das Garten- und/oder Forstbearbeitungsgerät zur, insbesondere werkzeugfrei und/oder zerstörungsfrei, lösbaren elektrischen Verbindung miteinander ausgebildet beziehungsweise konfiguriert sein, insbesondere mittels Steckverbinder. Weiter zusätzlich oder alternativ können der Akkupack und das Garten- und/oder Forstbearbeitungsgerät zur, insbesondere werkzeugfrei und/oder zerstörungsfrei, insbesondere lösbaren, mechanischen Verbindung miteinander ausgebildet beziehungsweise konfiguriert sein. Insbesondere kann das Garten- und/oder Forstbearbeitungsgerät zum Tragen des Akkupacks ausgebildet beziehungsweise konfiguriert sein.

In einer Weiterbildung der Erfindung weist das Garten- und/oder Forstbearbeitungssystem eine Rückentragvorrichtung auf. Die Rückentragvorrichtung ist zum Tragen des Akkupacks ausgebildet beziehungsweise konfiguriert, insbesondere auf einem Rücken eines Benutzers. Insbesondere können die Rückentragvorrichtung und der Akkupack zur, insbesondere werkzeugfrei und/oder zerstörungsfrei, insbesondere lösbaren, mechanischen Verbindung miteinander ausgebildet beziehungsweise konfiguriert sein. Zusätzlich oder alternativ kann das Garten- und/oder Forstbearbeitungssystem, insbesondere die Rückentragvorrichtung, ein elektrisches Verbindungskabel zur elektrischen Verbindung des Akkupacks und des Garten- und/oder Forstbearbeitungsgeräts miteinander aufweisen.

In einer Weiterbildung der Erfindung ist das elektrisch angetriebene Garten- und/oder Forstbearbeitungsgerät eine Säge, ein Hoch-Entaster, ein Freischneider, eine Heckenschere, ein Heckenschneider, ein Blasgerät, ein Laubbläser, eine Astschere, ein Trennschleifer, ein Kehrgerät, eine Kehrwalze, eine Kehrbürste, ein Rasenmäher, ein Vertikutierer oder eine Grasschere.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1: eine perspektivische Explosionsansicht eines erfindungsgemäßen Akkupacks aufweisend einen erfindungsgemäßen Zellverbinderaufbau,
- Fig. 2: eine Perspektivansicht auf eine Vorderseite des Akkupacks aufweisend den Zellverbinderaufbau der Fig. 1,
- Fig. 3: eine Perspektivansicht auf eine Rückseite des Akkupacks aufweisend den Zellverbinderaufbau der Fig. 1,
- Fig. 4: eine Perspektivansicht auf die Vorderseite des Akkupacks aufweisend den Zellverbinderaufbau ohne Spannungsabgriffelemente und ohne Abgriffelementkörper der Fig. 1,
- Fig. 5: eine Perspektivansicht mindestens eines Temperatursensor-Kabels des Zellverbinderaufbaus und eines Messelektronikteils des Akkupacks der Fig. 1,
- Fig. 6: eine Perspektivansicht von Spannungsabgriffelementen, mindestens eines Abgriffelementkörpers, des mindestens einen Temperatursensor-Kabels des Zellverbinderaufbaus und des Messelektronikteils des Akkupacks der Fig. 1,
- Fig. 7: eine Perspektivansicht von Zellverbindern des Zellverbinderaufbaus der Fig. 1,
- Fig. 8: eine Perspektivansicht eines vorderseitigen Zellverbinderelements des Zellverbinderaufbaus ohne Zellverbinder der Fig. 1,
- Fig. 9: eine Perspektivansicht eines rückseitigen Zellverbinderelements des Zellverbinderaufbaus ohne Zellverbinder der Fig. 1,
- Fig. 10: eine Perspektivansicht des vorderseitigen Zellverbinderelements mit Zellverbindern des Zellverbinderaufbaus der Fig. 1,
- Fig. 11: eine Perspektivansicht des rückseitigen Zellverbinderelements mit Zellverbindern des Zellverbinderaufbaus der Fig. 1,
- Fig. 12: eine Perspektivansicht des vorderseitigen Zellverbinderelements mit Zellverbindern und des, insbesondere vorderseitigen, Abgriffelementkörpers mit Spannungsabgriffelementen des Zellverbinderaufbaus der Fig. 1,
- Fig. 13: eine Perspektivansicht des rückseitigen Zellverbinderelements mit Zellverbindern und des, insbesondere, rückseitigen Abgriffelementkörpers mit Spannungsabgriffelementen des Zellverbinderaufbaus der Fig. 1,
- Fig. 14: eine Perspektivansicht der Spannungsabgriffelemente des Zellverbinderaufbaus der Fig. 1,
- Fig. 15: eine Perspektivansicht auf eine Außenseite und eine Innenseite des vorderseitigen Abgriffelementkörpers ohne Spannungsabgriffelemente des Zellverbinderaufbaus der Fig. 1,
- Fig. 16: eine Perspektivansicht auf eine Außenseite und eine Innenseite des rückseitigen Abgriffelementkörpers ohne Spannungsabgriffelemente des Zellverbinderaufbaus der Fig. 1,
- Fig. 17: eine Perspektivansicht auf die Außenseite und die Innenseite des vorderseitigen Abgriffelementkörpers mit Spannungsabgriffelementen des Zellverbinderaufbaus der Fig. 1,
- Fig. 18: eine Perspektivansicht auf die Außenseite und die Innenseite des rückseitigen Abgriffelementkörpers mit Spannungsabgriffelementen des Zellverbinderaufbaus der Fig. 1,
- Fig. 19: eine Schnittansicht des Akkupacks der Fig. 1,
- Fig. 20: eine Perspektivansicht des Akkupacks aufweisend ein Gehäuse der Fig. 1,
- Fig. 21: eine Perspektivansicht eines erfindungsgemäßen Garten- und/oder Forstbearbeitungssystems aufweisend den Akkupack der Fig. 1 und ein elektrisch angetriebenes Garten- und/oder Forstbearbeitungsgerät in Form eines Rasenmähers, und
- Fig. 22: eine weitere Perspektivansicht des Garten- und/oder Forstbearbeitungssystems der Fig. 21 aufweisend ein weiteres elektrisch angetriebenes Garten- und/oder Forstbearbeitungsgerät in Form eines Blasgeräts und eine Rückentragvorrichtung zum Tragen des Akkupacks der Fig. 1.

### DETAILLIERTE BESCHREIBUNG DER AUSFÜHRUNGSBEISPIELE

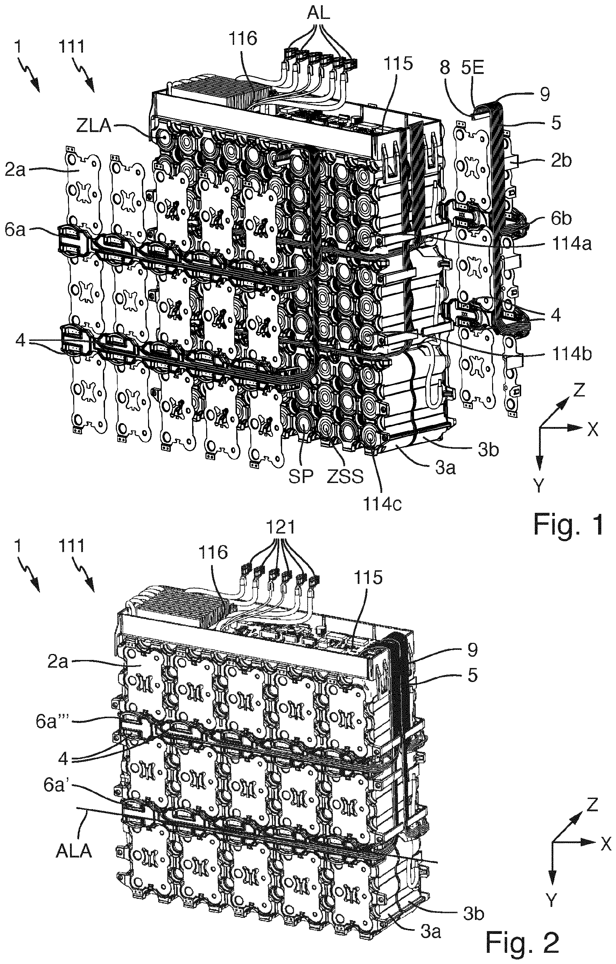

Fig. 1 bis 22 zeigen einen erfindungsgemäßen Akkupack 111 zur Versorgung eines elektrisch angetriebenen Garten- und/oder Forstbearbeitungsgeräts 101 mit elektrischer Antriebsleistung AL. Der Akkupack 111 weist einen erfindungsgemäßen Zellverbinderaufbau 1 und Akkumulatorzellen 114a, 114b, 114c in Form von Rundzellen auf.

Der erfindungsgemäße Zellverbinderaufbau 1 ist für den Akkupack 111 zur Versorgung des elektrisch angetriebenen Garten- und/oder Forstbearbeitungsgeräts 101 mit elektrischer Antriebsleistung AL ausgebildet. Der Zellverbinderaufbau 1 weist eine Mehrzahl von Zellverbindern 2a, 2b, 2c in Form von Zellverbinderblechen, mindestens ein Zellverbinderelement 3a, 3b, eine Mehrzahl von Spannungsabgriffelementen 4 und mindestens einen Abgriffelementkörper 6a, 6b auf. Die Zellverbinder 2a, 2b, 2c sind zur elektrischen Verbindung der Akkumulatorzellen 114a, 114b, 114c ausgebildet. Des Weiteren sind die Zellverbinder 2a, 2b, 2c und das mindestens eine Zellverbinderelement 3a, 3b zur Anordnung aneinander und zur Sicherung gegen Lösen voneinander ausgebildet. Die Spannungsabgriffelemente 4 weisen Spannungsabgriffkabel 5 auf. Die Spannungsabgriffkabel 5 sind zur elektrischen Verbindung mit den Zellverbindern 2a, 2b, 2c ausgebildet. Außerdem sind die Spannungsabgriffelemente 4 und der mindestens eine Abgriffelementkörper 6a, 6b zur Anordnung aneinander und zur Sicherung gegen Lösen voneinander ausgebildet. Das mindestens eine Zellverbinderelement 3a, 3b mit den Zellverbindern 2a, 2b, 2c und der mindestens eine Abgriffelementkörper 6a, 6b mit den Spannungsabgriffelementen 4 sind zur mechanischen Verbindung miteinander ausgebildet.

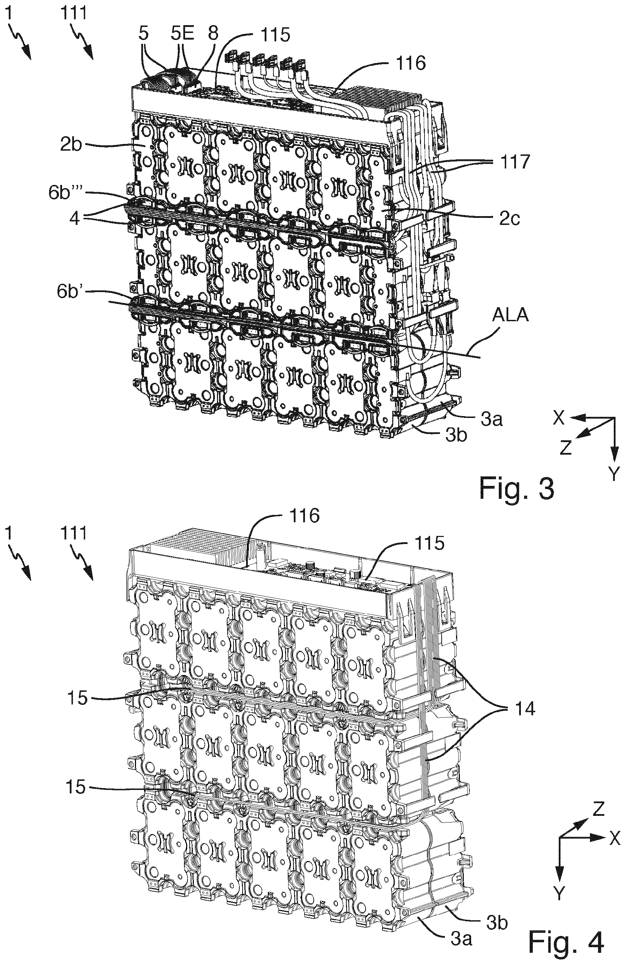

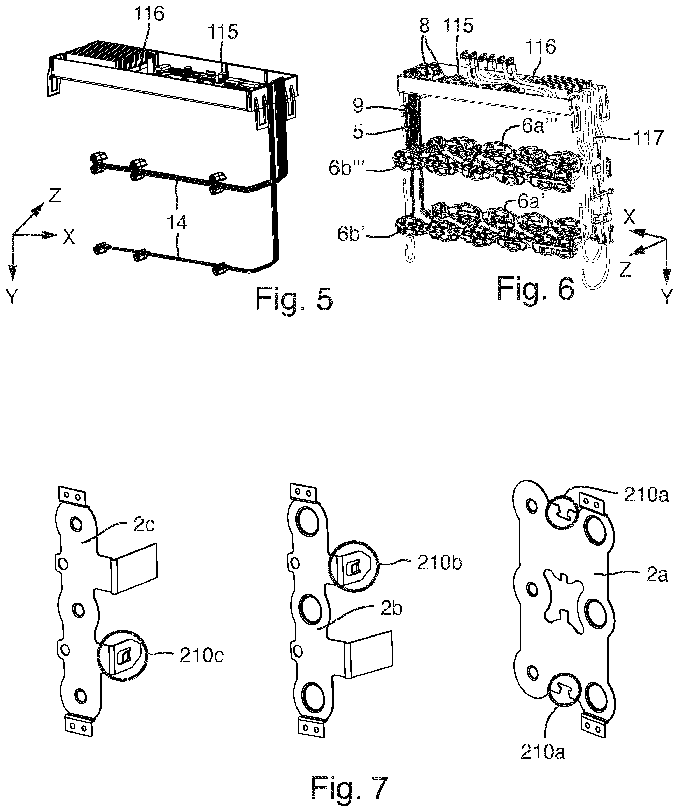

Im gezeigten Ausführungsbeispiel weist der Zellverbinderaufbau 1 dreiunddreißig Zellverbinder 2a, 2b, 2c auf, wie in Fig. 2 und 3 gezeigt. In alternativen Ausführungsbeispielen kann der Zellverbinderaufbau mindestens zwei, insbesondere mindestens fünf, insbesondere mindestens zehn, insbesondere mindestens zwanzig, insbesondere mindestens dreißig, insbesondere mindestens vierzig, insbesondere mindestens fünfzig, Zellverbinder aufweisen. Im Detail weist der Zellverbinderaufbau 1 fünfzehn plus zwölf 6-fach Zellverbinder 2a auf, insbesondere Plus- und Minuspol-Zellverbinder, wie in Fig. 7 rechts gezeigt. Des Weiteren weist der Zellverbinderaufbau 1 drei 3-fach Zellverbinder 2b auf, insbesondere Minuspol-Zellverbinder, wie in Fig. 7 Mitte gezeigt. Außerdem weist der Zellverbinderaufbau 1 drei 3-fach Zellverbinder 2c auf, insbesondere Pluspol-Zellverbinder, wie in Fig. 7 links gezeigt.

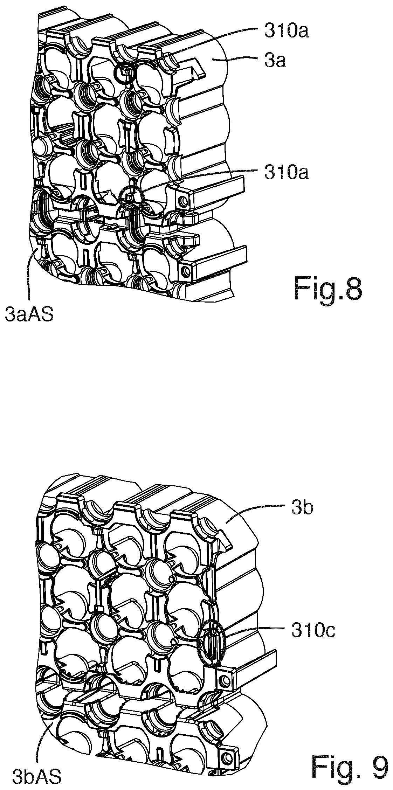

Weiter weist im gezeigten Ausführungsbeispiel der Zellverbinderaufbau 1 zwei Zellverbinderelemente 3a, 3b auf, wie in Fig. 8 und 9 gezeigt. In alternativen Ausführungsbeispielen kann der Zellverbinderaufbau nur ein einziges Zellverbinderelement oder mindestens drei Zellverbinderelemente aufweisen.

In Fig, 2, 10, 12 und 19 sind fünfzehn Zellverbinder 2a und das Zellverbinderelement 3a aneinander angeordnet und gesichert. Des Weiteren sind in Fig. 3, 11, 13 und 19 die Zellverbinder 2a, 2b, 2c, insbesondere zwölf Zellverbinder 2a, die drei Zellverbinder 2b und die drei Zellverbinder 2c, und das Zellverbinderelement 3b aneinander angeordnet und gesichert. Zusätzlich sind in Fig. 1 bis 4 und 19 die Zellverbinderelemente 3a, 3b miteinander mechanisch verbunden. Außerdem verbinden in Fig. 2 bis 4 und 19 die Zellverbinder 2a, 2b, 2c die Akkumulatorzellen 114a, 114b, 114c elektrisch.

Des Weiteren weist im gezeigten Ausführungsbeispiel der Zellverbinderaufbau 1 zweiundzwanzig Spannungsabgriffelemente 4 auf, wie in Fig. 2, 3, 6, 17 und 18 gezeigt. In alternativen Ausführungsbeispielen kann der Zellverbinderaufbau mindestens zwei, insbesondere mindestens fünf, insbesondere mindestens zehn, insbesondere mindestens zwanzig, insbesondere mindestens dreißig, insbesondere mindestens vierzig, insbesondere mindestens fünfzig, Spannungsabgriffelemente aufweisen. Im Detail weisen die Spannungsabgriffelemente 4 an die Spannungsabgriffkabel 5 anschließende Kontaktelemente 7 in Form von Kontaktzungen zur elektrischen Verbindung mit den Zellverbindern 2a, 2b, 2c auf.

Außerdem weist im gezeigten Ausführungsbeispiel der Zellverbinderaufbau 1 vier Abgriffelementkörper 6a, 6b auf, wie in Fig. 1 bis 3 und 6 gezeigt. In alternativen Ausführungsbeispielen kann der Zellverbinderaufbau nur einen einzigen, zwei, drei oder mindestens fünf Abgriffelementkörper aufweisen.

In Fig. 2 sind, insbesondere jeweils, fünf Spannungsabgriffelemente 4 und einer der Abgriffelementkörper 6a aneinander angeordnet und gesichert. Weiter sind in Fig. 3, insbesondere jeweils, sechs Spannungsabgriffelemente 4 und einer der Abgriffelementkörper 6b aneinander angeordnet und gesichert.

Zudem sind in Fig. 2, 12 und 19 das Zellverbinderelement 3a mit den Zellverbindern 2a und die Abgriffelementkörper 6a mit den Spannungsabgriffelementen 4 mechanisch miteinander verbunden. Des Weiteren sind in Fig. 3, 13 und 19 das Zellverbinderelement 3b mit den Zellverbindern 2a, 2b, 2c und die Abgriffelementkörper 6b mit den Spannungsabgriffelementen 4 mechanisch miteinander verbunden. Außerdem sind die Spannungsabgriffkabel 5 mit den Zellverbindern 2a, 2b, 2c elektrisch verbunden.

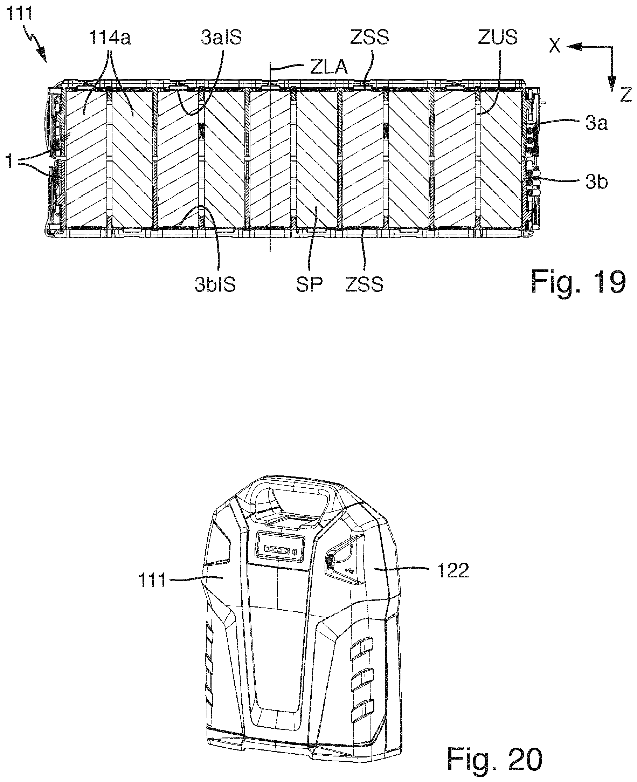

Zusätzlich ist das mindestens eine Zellverbinderelement 3a, 3b, im gezeigten Ausführungsbeispiel sind die Zellverbinderelemente 3a, 3b, zum Halten der Akkumulatorzellen 114a, 114b, 114c in Form der Rundzellen an mindestens einer Zellseite, insbesondere einer Zellumfangsseite ZUS, ausgebildet. In Fig. 1 und 19 hält das mindestens eine Zellverbinderelement 3a, 3b, im gezeigten Ausführungsbeispiel halten die Zellverbinderelemente 3a, 3b, die Akkumulatorzellen 114a, 114b, 114c, insbesondere jeweils, an der mindestens einen, insbesondere jeweiligen, Zellumfangsseite ZUS.

Die Zellverbinder 2a, 2b, 2c sind an dem mindestens einen Zellverbinderelement 3a, 3b, im gezeigten Ausführungsbeispiel an den Zellverbinderelementen 3a, 3b, im Bereich der Akkumulatorzellen 114a, 114b, 114c, insbesondere an einer, insbesondere jeweiligen, Zellstirnseite ZSS, wie in Fig. 1 und 19 gezeigt, beim Halten der Akkumulatorzellen 114a, 114b, 114c gesichert.

Zusätzlich oder alternativ ist der mindestens eine Abgriffelementkörper 6a, 6b, im gezeigten Ausführungsbeispiel sind die Abgriffelementkörper 6a, 6b, mit dem mindestens einen Zellverbinderelement 3a, 3b, im gezeigten Ausführungsbeispiel mit den Zellverbinderelementen 3a, 3b, im Bereich der Akkumulatorzellen 114a, 114b, 114c beim Halten der Akkumulatorzellen 114a, 114b, 114c mechanisch verbunden, wie in Fig. 19 gezeigt.

Weiter sind die Zellverbinder 2a, 2b, 2c und das mindestens eine Zellverbinderelement 3a, 3b, im gezeigten Ausführungsbeispiel die Zellverbinderelemente 3a, 3b, zur räumlich getrennten Positionierung der Zellverbinder 2a, 2b, 2c an dem mindestens einen Zellverbinderelement 3a, 3b, im gezeigten Ausführungsbeispiel an den Zellverbinderelementen 3a, 3b, und zur Positionssicherung der positionierten Zellverbinder 2a, 2b, 2c ausgebildet.

Zusätzlich oder alternativ sind die Spannungsabgriffelemente 4, insbesondere ihre Kontaktelemente 7, und der mindestens eine Abgriffelementkörper 6a, 6b, im gezeigten Ausführungsbeispiel die Abgriffelementkörper 6a, 6b, zur räumlich getrennten Positionierung der Spannungsabgriffelemente 4, insbesondere der Kontaktelemente 7, an dem mindestens einen Abgriffelementkörper 6a, 6b, im gezeigten Ausführungsbeispiel an den Abgriffelementkörpern 6a, 6b, und zur Positionssicherung der positionierten Spannungsabgriffelemente 4, insbesondere der Kontaktelemente 7, ausgebildet.

Im gezeigten Ausführungsbeispiel ist mindestens ein Teil der Akkumulatorzellen 114a, 114b, 114c in einer ersten Richtung x aufeinanderfolgend räumlich angeordnet, wie in Fig. 1 und 19 gezeigt. Im Detail weist der Akkupack 111 in der ersten Richtung x zehn Akkumulatorzellen 114a, 114b, 114c auf. In alternativen Ausführungsbeispielen kann der Akkupack in der ersten Richtung minimal sechs Akkumulatorzellen aufweisen. Des Weiteren ist ein Teil der Akkumulatorzellen 114a, 114b, 114c in einer zur ersten nicht-parallelen, insbesondere orthogonalen, zweiten Richtung y aufeinanderfolgend räumlich angeordnet. Im Detail weist der Akkupack 111 in der zweiten Richtung y neun Akkumulatorzellen 114a, 114b, 114c auf. In alternativen Ausführungsbeispielen kann der Akkupack in der zweiten Richtung minimal sechs und/oder maximal fünfzehn Akkumulatorzellen aufweisen. Außerdem sind die Akkumulatorzellen 114a, 114b, 114c in Form der Rundzellen jeweils mit einer Rundzellenlängsachse ZLA nicht-parallel, insbesondere orthogonal, zur ersten Richtung x und/oder zur zweiten Richtung y und/oder in einer zur ersten und zweiten nicht-parallelen, insbesondere orthogonalen, dritten Richtung z räumlich angeordnet.

Weiter ist im gezeigten Ausführungsbeispiel ein Teil der Zellverbinder 2a, 2b, 2c in der ersten Richtung x aufeinanderfolgend räumlich angeordnet. Im Detail sind an dem Zellverbinderelement 3a in der ersten Richtung x fünf Zellverbinder 2a angeordnet, wie in Fig. 2 gezeigt. In alternativen Ausführungsbeispielen können an dem Zellverbinderelement in der ersten Richtung mindestens zwei Zellverbinder angeordnet sein. Zudem sind an dem Zellverbinderelement 3b in der ersten Richtung x sechs Zellverbinder 2a, 2b, 2c angeordnet, wie in Fig. 3 gezeigt. In alternativen Ausführungsbeispielen können an dem Zellverbinderelement in der ersten Richtung mindestens drei Zellverbinder angeordnet sein. Des Weiteren ist im gezeigten Ausführungsbeispiel ein Teil der Zellverbinder 2a, 2b, 2c in der zweiten Richtung y aufeinanderfolgend räumlich angeordnet. Im Detail sind an dem Zellverbinderelement 3a in der zweiten Richtung y drei Zellverbinder 2a angeordnet. In alternativen Ausführungsbeispielen kann oder können an dem Zellverbinderelement in der zweiten Richtung nur ein einziger Zellverbinder oder mindestens zwei Zellverbinder angeordnet sein. Außerdem sind an dem Zellverbinderelement 3b in der zweiten Richtung y drei Zellverbinder 2a, 2b, 2c angeordnet. In alternativen Ausführungsbeispielen kann oder können an dem Zellverbinderelement in der zweiten Richtung nur ein einziger Zellverbinder oder mindestens zwei Zellverbinder angeordnet sein.

Im Detail schalten die Zellverbinder 2a, 2b, 2c einen Teil der Akkumulatorzellen 114a, 114b, 114c, im gezeigten Ausführungsbeispiel in drei Zellblöcken, in der ersten Richtung x elektrisch in Reihe. Weiter schalten die Zellverbinder 2a, 2b, 2c einen Teil der Akkumulatorzellen 114a, 114b, 114c, im gezeigten Ausführungsbeispiel in den drei Zellblöcken, in der zweiten Richtung y elektrisch parallel.

Im gezeigten Ausführungsbeispiel ist eine maximale elektrische Antriebsleistung MAL, insbesondere des Akkupacks 111, minimal 50 Watt (W) und/oder maximal 5 Kilowatt (kW).

Zusätzlich oder alternativ ist ein Maximalpotential MXP, insbesondere des Akkupacks 111, minimal 10 Volt (V), und/oder maximal 500 V, insbesondere 42 V.

Zusätzlich oder alternativ ist ein maximaler Energieinhalt MEI, insbesondere des Akkupacks 111, minimal 80 Wattstunden (Wh) und/oder maximal 5 Kilowattstunden (kWh), insbesondere 1,5 kWh.

Im Detail sind in dem in Fig. 2 und 3 oberen Zellblock und in dem in Fig. 2 und 3 unteren Zellblock einer der Zellverbinder 2a, 2b, 2c und eines der Spannungsabgriffelemente 4 einander zugeordnet beziehungsweise zueinander positioniert, wie auch in Fig. 6, 10 bis 14, 17 und 18 zu erkennen. Des Weiteren sind in dem in Fig. 2 und 3 mittleren Zellblock einer der Zellverbinder 2a, 2b, 2c und zwei der Spannungsabgriffelemente 4 einander zugeordnet beziehungsweise zueinander positioniert. In alternativen Ausführungsbeispielen können einer oder mehrere der Zellverbinder und eines oder mehrere der Spannungsabgriffelemente anders einander zugeordnet beziehungsweise zueinander positioniert sein.

Außerdem verlaufen in Fig. 2 und 3 die Abgriffelementkörper 6a, 6b zwischen den Zellverbindern 2a, 2b, 2c, insbesondere in der ersten Richtung x. In anderen Worten: die Abgriffelementkörper 6a, 6b sind, insbesondere jeweils, mit einer, insbesondere jeweiligen, Längsachse ALA in der ersten Richtung x räumlich angeordnet. In alternativen Ausführungsbeispielen können die Abgriffelementkörper anders verlaufen beziehungsweise mit der Längsachse anders räumlich angeordnet sein, insbesondere in der zweiten Richtung.

Weiter ist im gezeigten Ausführungsbeispiel der Zellverbinderaufbau 1 quaderförmig. Im Detail weist der Zellverbinderaufbau 1 eine Länge in der ersten Richtung x von 27 Zentimeter (cm) auf. In alternativen Ausführungsbeispielen kann der Zellverbinderaufbau eine Länge in der ersten Richtung von minimal 10 cm und/oder von maximal 50 cm aufweisen. Des Weiteren weist der Zellverbinderaufbau 1 eine Breite in der zweiten Richtung y von 27 cm auf. In alternativen Ausführungsbeispielen kann der Zellverbinderaufbau eine Breite in der zweiten Richtung von minimal 9 cm und/oder von maximal 60 cm aufweisen. Außerdem weist der Zellverbinderaufbau 1 eine Höhe in der dritten Richtung z von 8 cm auf. In alternativen Ausführungsbeispielen kann der Zellverbinderaufbau eine Höhe in der dritten Richtung von minimal 3 cm und/oder von maximal 20 cm aufweisen.

Weiter sind Kabelenden 5E der Spannungsabgriffkabel 5 zueinander fest räumlich angeordnet, wie in Fig. 1 bis 3, 6 und 12 gezeigt. Im gezeigten Ausführungsbeispiel mittels zweier Steckverbinder 8. Zusätzlich oder alternativ bilden die Spannungsabgriffkabel 5 zwei Flachbandkabel 9. In alternativen Ausführungsbeispielen können die Kabelenden zueinander fest räumlich angeordnet sein mittels nur eines einzigen Steckverbinders oder mindestens drei Steckverbindern und/oder die Spannungsabgriffkabel können nur ein einziges Flachbandkabel oder mindestens drei Flachbandkabel bilden.

Des Weiteren sind die Zellverbinder 2a, 2b, 2c, insbesondere jeweils, einstückig und/oder elektrisch leitend ausgebildet, wie in Fig. 7 gezeigt.

Zusätzlich oder alternativ ist das mindestens eine Zellverbinderelement 3a, 3b, im gezeigten Ausführungsbeispiel sind die Zellverbinderelemente 3a, 3b, insbesondere jeweils, einstückig und/oder elektrisch isolierend ausgebildet, wie in Fig. 8 und 9 gezeigt.

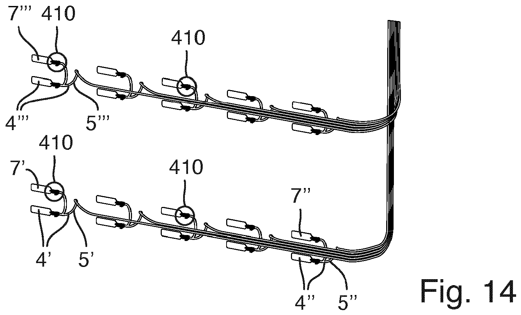

Zusätzlich oder alternativ sind die Spannungsabgriffelemente 4, insbesondere jeweils, einstückig und/oder elektrisch leitend ausgebildet, wie in Fig. 14 gezeigt.

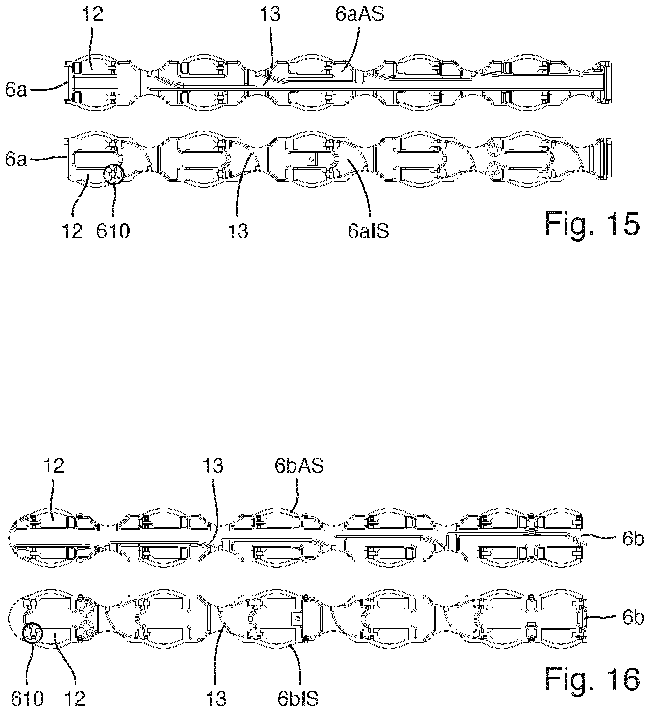

Zusätzlich oder alternativ ist der mindestens eine Abgriffelementkörper 6a, 6b, im gezeigten Ausführungsbeispiel sind die Abgriffelementkörper 6a, 6b, insbesondere jeweils, einstückig und/oder elektrisch isolierend ausgebildet, wie in Fig. 15 und 16 gezeigt.

Außerdem sind die Zellverbinder 2a, 2b, 2c, insbesondere jeweils, und das mindestens eine Zellverbinderelement 3a, 3b, im gezeigten Ausführungsbeispiel die Zellverbinderelemente 3a, 3b, zur formschlüssigen Verbindung, insbesondere Schnappverbindung, miteinander ausgebildet, wie in Fig. 7 bis 11 gezeigt. Im Detail weisen die Zellverbinder 2a, 2b, 2c, insbesondere jeweils, Verbindungselemente 210a, 210b, 210c auf, insbesondere Schnappverbindungselemente. Das mindestens eine Zellverbinderelement 3a, 3b weist, im gezeigten Ausführungsbeispiel weisen die Zellverbinderelemente 3a, 3b, Verbindungselemente 310a, 310b, 310c auf, insbesondere Schnappverbindungselemente.

Die Spannungsabgriffelemente 4, insbesondere die Kontaktelemente 7 in Form der Kontaktzungen, insbesondere jeweils, und der mindestens eine Abgriffelementkörper 6a, 6b, im gezeigten Ausführungsbeispiel die Abgriffelementkörper 6a, 6b, sind zur Schnappverbindung miteinander ausgebildet, wie in Fig. 14 bis 18 gezeigt. Im Detail weisen die Spannungsabgriffelemente 4, insbesondere die Kontaktelemente 7 in Form der Kontaktzungen, insbesondere jeweils, Verbindungselemente 410 auf, insbesondere Schnappverbindungselemente. Der mindestens eine Abgriffelementkörper 6a, 6b weist, im gezeigten Ausführungsbeispiel weisen die Abgriffelementkörper 6a, 6b, insbesondere jeweils, Verbindungselemente 610 auf, insbesondere Schnappverbindungselemente.

Zusätzlich sind das mindestens eine Zellverbinderelement 3a, 3b, im gezeigten Ausführungsbeispiel die Zellverbinderelemente 3a, 3b, insbesondere jeweils, mit den Zellverbindern 2a, 2b, 2c und der mindestens eine Abgriffelementkörper 6a, 6b, im gezeigten Ausführungsbeispiel die Abgriffelementkörper 6a, 6b, insbesondere jeweils, mit den Spannungsabgriffelementen 4 zur formschlüssigen Verbindung, insbesondere Schnappverbindung, miteinander ausgebildet, wie in Fig. 8 bis 13 und 15 bis 18 gezeigt. Im Detail weist das mindestens eine Zellverbinderelement 3a, 3b, im gezeigten Ausführungsbeispiel weisen die Zellverbinderelemente 3a, 3b, insbesondere jeweils, Verbindungselemente 311 auf, insbesondere Schnappverbindungselemente. Der mindestens eine Abgriffelementkörper 6a, 6b weist, im gezeigten Ausführungsbeispiel weisen die Abgriffelementkörper 6a, 6b, insbesondere jeweils, Verbindungselemente 611 auf, insbesondere Schnappverbindungselemente 611.

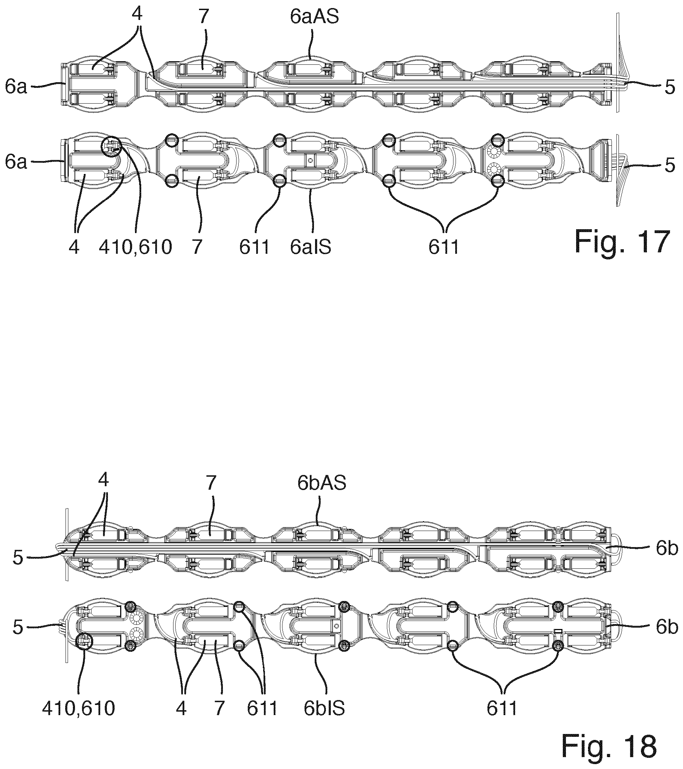

Im Detail weist der Zellverbinderaufbau 1 ein vorderseitiges Zellverbinderelement 3a, wie in Fig. 8, 10 und 12 gezeigt, ein rückseitiges Zellverbinderelement 3b, wie in Fig. 9, 11 und 13 gezeigt, mindestens einen vorderseitigen Abgriffelementkörper 6a, im gezeigten Ausführungsbeispiel zwei, wie in Fig. 15 und 17 gezeigt, und mindestens einen rückseitigen Abgriffelementkörper 6b auf, im gezeigten Ausführungsbeispiel zwei, wie in Fig. 16 und 18 gezeigt. Das vorderseitige Zellverbinderelement 3a und der mindestens eine vorderseitige Abgriffelementkörper 6a, im gezeigten Ausführungsbeispiel die vorderseitigen Abgriffelementkörper 6a, insbesondere jeweils, sind zur mechanischen Verbindung miteinander ausgebildet. Das rückseitige Zellverbinderelement 3b und der mindestens eine rückseitige Abgriffelementkörper 6b, im gezeigten Ausführungsbeispiel die rückseitigen Abgriffelementkörper 6b, insbesondere jeweils, sind zur mechanischen Verbindung miteinander ausgebildet. Weiter sind das vorderseitige Zellverbinderelement 3a und das rückseitige Zellverbinderelement 3b verschieden zur Vermeidung einer seitenfalschen Verbindung ausgebildet beziehungsweise geformt. Zusätzlich oder alternativ sind der mindestens eine vorderseitige Abgriffelementkörper 6a, im gezeigten Ausführungsbeispiel die vorderseitigen Abgriffelementkörper 6a, und der mindestens eine rückseitige Abgriffelementkörper 6b, im gezeigten Ausführungsbeispiel die rückseitigen Abgriffelementkörper 6b, verschieden zur Vermeidung einer seitenfalschen Verbindung ausgebildet beziehungsweise geformt.

Zusätzlich oder alternativ ist ein Spannungsabgriffkabel 5' länger als ein anderes Spannungsabgriffkabel 5" zur Vermeidung einer falschen Anordnung eines entfernten Spannungsabgriffelements 4`, insbesondere eines entfernten Kontaktelements 7`, und eines nahen Spannungsabgriffelements 4", insbesondere eines nahen Kontaktelements 7", an dem Abgriffelementkörper 6a, 6b ausgebildet, wie in Fig. 2, 3, 6 und 14 gezeigt. Zusätzlich oder alternativ ist das Spannungsabgriffkabel 5' länger als ein anderes Spannungsabgriffkabel 5‴ zur Vermeidung einer falschen Verbindung eines entfernten Abgriffelementkörpers 6a', 6b' und eines nahen Abgriffelementkörpers 6a‴, 6b‴ mit dem Zellverbinderelement 3a, 3b ausgebildet, wie in Fig. 2, 3, 6 und 14 gezeigt.

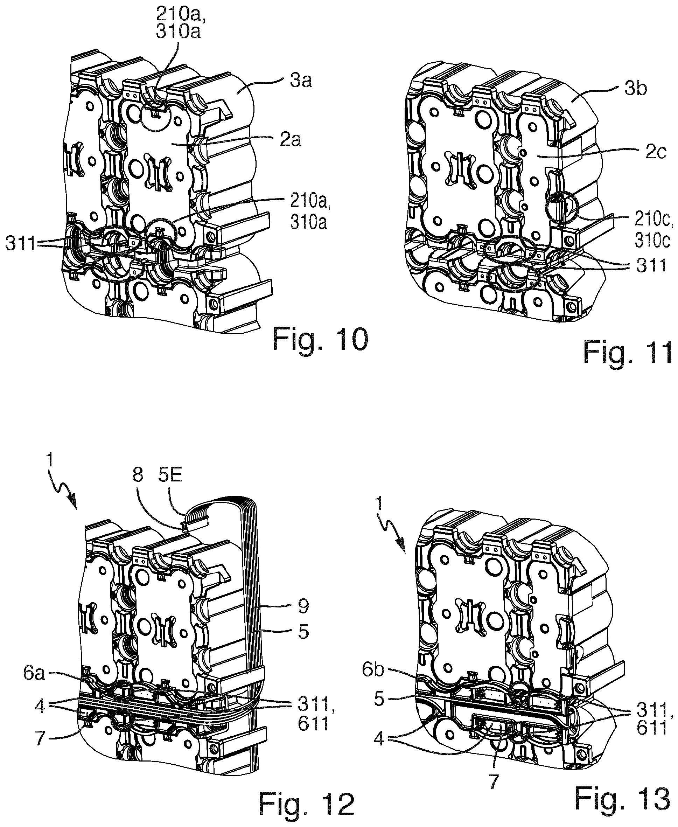

Zudem sind/ist die Zellverbinder 2a, 2b, 2c, insbesondere jeweils, und/oder das mindestens eine Zellverbinderelement 3a, 3b, insbesondere jeweils, und/oder die Spannungsabgriffelemente 4, insbesondere die Kontaktelemente 7, insbesondere jeweils, und/oder der mindestens eine Abgriffelementkörper 6a, 6b, insbesondere jeweils, derart ausgebildet, dass bei mechanischer Verbindung des mindestens einen Zellverbinderelements 3a, 3b mit den Zellverbindern 2a, 2b, 2c und des mindestens einen Abgriffelementkörpers 6a, 6b mit den Spannungsabgriffelementen 4, insbesondere den Kontaktelementen 7, die Spannungsabgriffelemente 4 mindestens teilweise, insbesondere die Kontaktelemente 7, über den Zellverbindern 2a, 2b, 2c in einer Richtung z, -z von außen nach innen angeordnet sind und von außen für eine, insbesondere stoffschlüssige Verbindung, insbesondere eine Schweißverbindung, mit den Zellverbindern 2a, 2b, 2c zugänglich sind, wie in Fig. 10 bis 18 gezeigt. Im Detail weist der Abgriffelementkörper 6a, 6b, insbesondere jeweils, Aussparungen 12, insbesondere Fenster, für mindestens Teile der Spannungsabgriffelemente 4, insbesondere die Kontaktelemente 7, auf.

Zusätzlich sind/ist im gezeigten Ausführungsbeispiel die Zellverbinder 2a, 2b, 2c, insbesondere jeweils, und/oder das mindestens eine Zellverbinderelement 3a, 3b, insbesondere jeweils, und/oder die Spannungsabgriffelemente 4, insbesondere jeweils, und/oder der mindestens eine Abgriffelementkörper 6a, 6b, insbesondere jeweils, derart ausgebildet, dass bei mechanischer Verbindung des mindestens einen Zellverbinderelements 3a, 3b mit den Zellverbindern 2a, 2b, 2c und des mindestens einen Abgriffelementkörpers 6a, 6b mit den Spannungsabgriffelementen 4 die Zellverbinder 2a, 2b, 2c, mindestens teilweise über den Akkumulatorzellen 114a, 114b, 114c in der Richtung z, -z von außen nach innen angeordnet sind und von außen für eine, insbesondere stoffschlüssige, Verbindung, insbesondere eine Schweißverbindung, mit den Akkumulatorzellen 114a, 114b, 114c, insbesondere Polen der Akkumulatorzellen 114a, 114b, 114c an der mindestens einen Zellstirnseite ZSS, zugänglich sind, wie in Fig. 1 bis 3 gezeigt.

Des Weiteren ist das mindestens eine Zellverbinderelement 3a, 3b, im gezeigten Ausführungsbeispiel sind die Zellverbinderelemente 3a, 3b, insbesondere jeweils, zur Anordnung von den Akkumulatorzellen 114a, 114b, 114c in Form der Rundzellen, in der Richtung -z, z von innen nach außen auf einer, insbesondere jeweiligen, Innenseite 3aIS, 3blS des Zellverbinderelements 3a, 3b ausgebildet, wie in Fig. 19 gezeigt. Das mindestens eine Zellverbinderelement 3a, 3b ist, im gezeigten Ausführungsbeispiel sind die Zellverbinderelemente 3a, 3b, zur Anordnung der Zellverbinder 2a, 2b, 2c und/oder des mindestens einen Abgriffelementkörpers 6a, 6b, im gezeigten Ausführungsbeispiel der Abgriffelementkörper 6a, 6b, mit den Spannungsabgriffelementen 4 in der Richtung z, -z von außen nach innen auf einer, insbesondere jeweiligen, der Innenseite 3aIS, 3blS gegenüberliegenden Außenseite 3aAS, 3bAS des Zellverbinderelements 3a, 3b ausgebildet, wie in Fig. 1 bis 3 und 8 bis 13 gezeigt.

Außerdem sind/ist das mindestens eine Zellverbinderelement 3a, 3b, im gezeigten Ausführungsbeispiel sind die Zellverbinderelemente 3a, 3b, insbesondere jeweils, und/oder die Zellverbinder 2a, 2b, 2c, insbesondere jeweils, zur, insbesondere formschlüssigen, Sicherung der Spannungsabgriffelemente 4, insbesondere der Kontaktelemente 7, gegen Lösen von dem Abgriffelementkörper 6a, 6b bei mechanischer Verbindung des Zellverbinderelements 3a, 3b mit den Zellverbindern 2a, 2b, 2c und des Abgriffelementkörpers 6a, 6b mit den Spannungsabgriffelementen 4 ausgebildet, wie in Fig. 12, 13, 17 und 18 gezeigt. Im Detail sind die Kontaktelemente 7 in Form der Kontaktzungen an einer, insbesondere jeweiligen, Innenseite 6aIS, 6blS des mindestens einen Abgriffelementkörpers 6a, 6b angeordnet, insbesondere in den Abgriffelementkörper 6a, 6b eingeschoben und verclipst, wie in Fig. 17 und 18 unten gezeigt. Weiter sind das mindestens eine Zellverbinderelement 3a, 3b und der mindestens eine Abgriffelementkörper 6a, 6b zur mechanischen Verbindung miteinander mit der Außenseite 3aAS, 3bAS des Zellverbinderelements 3a, 3b und der Innenseite 6aIS, 6blS des Abgriffelementkörpers 6a, 6b einander zugewandt ausgebildet, wie in Fig. 12 und 13 gezeigt.

Zusätzlich sind im gezeigten Ausführungsbeispiel die Spannungsabgriffkabel 5 in dem mindestens einen Abgriffelementkörper 6a, 6b geführt, insbesondere in Kabelführungskanälen 13 des mindestens einen Abgriffelementkörpers 6a, 6b, wie in Fig. 15 bis 17 gezeigt. Im Detail sind die Spannungsabgriffkabel 5 von der, insbesondere jeweiligen, Innenseite 6aIS, 6blS des mindestens einen Abgriffelementkörpers 6a, 6b zu einer, insbesondere jeweiligen, der Innenseite 6aIS, 6blS gegenüberliegenden Außenseite 6aAS, 6bAS des mindestens einen Abgriffelementkörpers 6a, 6b geführt, insbesondere zur Sicherung gegen Lösen von dem Abgriffelementkörper 6a, 6b abgewinkelt und/oder geklemmt.

Zudem ist der mindestens eine Abgriffelementkörper 6a, 6b derart offen ausgebildet, dass die Spannungsabgriffkabel 5 an diesem anordenbar sind, insbesondere mit den Kontaktelementen 7 in Form der Kontaktzungen, dem mindestens einen Steckverbinder 8 und/oder dem mindestens einen gebildeten Flachbandkabel 9.

Des Weiteren sind die Spannungsabgriffkabel 5 an, insbesondere in, dem mindestens einen Zellverbinderelement 3a, 3b montiert beziehungsweise über das mindestens eine Zellverbinderelement 3a, 3b verlegt, wie in Fig. 2 gezeigt.

Außerdem weist der Akkupack 111 ein Messelektronikteil 115 auf, wie in Fig. 1 bis 6 gezeigt. Der Messelektronikteil 115 ist zur elektrischen Verbindung mit den Akkumulatorzellen 114a, 114b, 114c mittels der Zellverbinder 2a, 2b, 2c und der Spannungsabgriffelemente 4, insbesondere der Spannungsabgriffkabel 5, zur Messung von Spannungen SP, insbesondere von Mittelspannungen, von den Akkumulatorzellen 114a, 114b, 114c ausgebildet. Im Detail weist der Messelektronikteil 115 mindestens einen weiteren Steckverbinder zur elektrischen Verbindung, insbesondere mit dem mindestens einen Steckverbinder 8, auf.

Weiter weist der Zellverbinderaufbau 1 mindesten ein weiteres Kabel 14, insbesondere ein Temperatursensor-Kabel, im gezeigten Ausführungsbeispiel weitere Kabel auf, wie in Fig. 4 bis 6 gezeigt. Das mindestens eine weitere Kabel 14, im gezeigten Ausführungsbeispiel die weiteren Kabel 14, und das mindestens eine, insbesondere vorderseitige, Zellverbinderelement 3a sind zur Anordnung aneinander ausgebildet. Das mindestens eine, insbesondere vorderseitige, Zellverbinderelement 3a und der mindestens eine Abgriffelementkörper 6a, im gezeigten Ausführungsbeispiel die Abgriffelementkörper 6a, sind zur, insbesondere formschlüssigen, Sicherung des angeordneten mindestens einen weiteren Kabels 14, im gezeigten Ausführungsbeispiel der weiteren Kabel 14, gegen Lösen von dem Zellverbinderelement 3a bei mechanischer Verbindung des Zellverbinderelements 3a und des Abgriffelementkörpers 6a, im gezeigten Ausführungsbeispiel der Abgriffelementkörper 6a, ausgebildet. Im Detail weist das mindestens eine, insbesondere vorderseitige, Zellverbinderelement 3a mindestens eine Kabelrinne 15, im gezeigten Ausführungsbeispiel zwei Kabelrinnen 15, zur Aufnahme des mindestens einen weiteren Kabels 14, im gezeigten Ausführungsbeispiel der weiteren Kabel 14, auf. Zusätzlich ist im gezeigten Ausführungsbeispiel das mindestens eine weitere Kabel 14, im gezeigten Ausführungsbeispiel sind die weiteren Kabel 14, an, insbesondere in, dem mindestens einen, insbesondere vorderseitigen, Zellverbinderelement 3a montiert beziehungsweise über das mindestens eine, insbesondere vorderseitige, Zellverbinderelement 3a verlegt.

Zusätzlich ist im gezeigten Ausführungsbeispiel der Messelektronikteil 115, zur, insbesondere automatischen, Messung von Temperaturen, insbesondere Temperaturwerten, von den Akkumulatorzellen 114a, 114b, 114c, ausgebildet.

Des Weiteren weist im gezeigten Ausführungsbeispiel der Akkupack 111 einen Leistungselektronikteil 116 auf, wie in Fig. 1 bis 6 gezeigt. Der Leistungselektronikteil 116 ist zur elektrischen Verbindung mit den Akkumulatorzellen 114a, 114b, 114c mittels, insbesondere von den Spannungsabgriffkabeln 5 und/oder dem mindestens einen weiteren Kabel 14 verschiedenen, Leistungsleitungen 117 und der Zellverbinder 2b, 2c ausgebildet. Im Detail sind die Leistungsleitungen 117 an, insbesondere in, dem mindestens einen Zellverbinderelement 3a, 3b montiert beziehungsweise über das mindestens eine Zellverbinderelement 3a, 3b verlegt.

Außerdem weist im gezeigten Ausführungsbeispiel der Akkupack 111 Steckverbinder 121 auf, insbesondere zur elektrischen Verbindung des Akkupacks 111 mit dem Garten- und/oder Forstbearbeitungsgerät 101, wie in Fig. 1 bis 3 gezeigt.

Weiter weist im gezeigten Ausführungsbeispiel der Akkupack 111 ein gemeinsames Gehäuse 122, insbesondere Schutzgehäuse, auf, wie in Fig. 20 gezeigt. Der Zellverbinderaufbau 1 und die Akkumulatorzellen 114a, 114b, 114c sind in dem gemeinsamen Gehäuse 122 räumlich angeordnet. Zudem sind in dem gemeinsamen Gehäuse 122 der Messelektronikteil 115, der Leistungselektronikteil 116, die Leistungsleitungen 117 und die Steckverbinder 121 räumlich angeordnet.

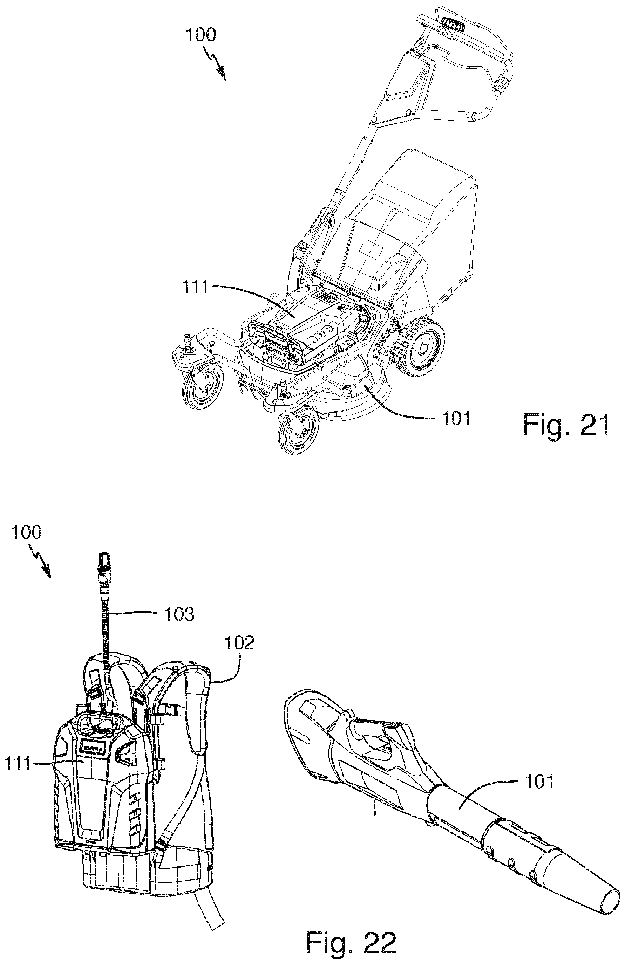

Fig. 21 und 22 zeigen ein erfindungsgemäßes Garten- und/oder Forstbearbeitungssystem 100. Das Garten- und/oder Forstbearbeitungssystem 100 weist den Akkupack 111 und das elektrisch angetriebene Garten- und/oder Forstbearbeitungsgerät 101 auf. Der Akkupack 111 und das elektrisch angetriebene Garten- und/oder Forstbearbeitungsgerät 101 sind zur elektrischen Verbindung miteinander zur Versorgung des elektrisch angetriebenen Garten- und/oder Forstbearbeitungsgeräts 101 mit elektrischer Antriebsleistung AL von dem Akkupack 111 ausgebildet.

Im gezeigten Ausführungsbeispiel weist das Garten- und/oder Forstbearbeitungssystem 100 zwei Garten- und/oder Forstbearbeitungsgeräte 101 auf. In alternativen Ausführungsbeispielen kann das Garten- und/oder Forstbearbeitungssystem nur ein einziges Garten- und/oder Forstbearbeitungsgerät oder mindestens drei Garten- und/oder Forstbearbeitungsgeräte aufweisen.

In Fig. 21 ist das Garten- und/oder Forstbearbeitungsgerät 101 ein Rasenmäher. In Fig. 22 ist das Garten- und/oder Forstbearbeitungsgerät 101 ein Blasgerät. In alternativen Ausführungsbeispielen kann das Garten- und/oder Forstbearbeitungsgerät eine Säge, ein Hoch-Entaster, ein Freischneider, eine Heckenschere, ein Heckenschneider, ein Laubbläser, eine Astschere, ein Trennschleifer, ein Kehrgerät, eine Kehrwalze, eine Kehrbürste, ein Vertikutierer oder eine Grasschere sein.

Der Rasenmäher 101 ist zum Tragen des Akkupacks 111 ausgebildet.

Des Weiteren weist das Garten- und/oder Forstbearbeitungssystem 100 eine Rückentragvorrichtung 102 auf. Die Rückentragvorrichtung 102 ist zum Tragen des Akkupacks 111 ausgebildet.

Zusätzlich weist das Garten- und/oder Forstbearbeitungssystem 100, insbesondere die Rückentragvorrichtung 102, ein elektrisches Verbindungskabel 103 zur elektrischen Verbindung des Akkupacks 111 und des Garten- und/oder Forstbearbeitungsgeräts 101, in Fig. 22 des Blasgeräts, miteinander auf.

Wie die gezeigten und oben erläuterten Ausführungsbeispiele deutlich machen, stellt die Erfindung einen Zellverbinderaufbau für einen Akkupack zur Versorgung eines elektrisch angetriebenen Garten- und/oder Forstbearbeitungsgeräts mit elektrischer Antriebsleistung, wobei der Zellverbinderaufbau eine gute, insbesondere einfache, Montage ermöglicht, einen Akkupack aufweisend einen solchen Zellverbinderaufbau und Akkumulatorzellen und ein Garten- und/oder Forstbearbeitungssystem aufweisend einen solchen Akkupack und ein elektrisch angetriebenes Garten- und/oder Forstbearbeitungsgerät bereit.

## Patentansprüche

1. Zellverbinderaufbau (1) für einen Akkupack (111) zur Versorgung eines elektrisch angetriebenen Garten- und/oder Forstbearbeitungsgeräts (101) mit elektrischer Antriebsleistung (AL), wobei der Zellverbinderaufbau (1) aufweist:
- eine Mehrzahl von Zellverbindern (2a, 2b, 2c), wobei die Zellverbinder (2a, 2b, 2c) zur elektrischen Verbindung von Akkumulatorzellen (114a, 114b, 114c) ausgebildet sind,
- mindestens ein Zellverbinderelement (3a, 3b), wobei die Zellverbinder (2a, 2b, 2c) und das mindestens eine Zellverbinderelement (3a, 3b) zur Anordnung aneinander und zur Sicherung gegen Lösen voneinander ausgebildet sind,
- eine Mehrzahl von Spannungsabgriffelementen (4), wobei die Spannungsabgriffelemente (4) Spannungsabgriffkabel (5) aufweisen, wobei die Spannungsabgriffkabel (5) zur elektrischen Verbindung mit den Zellverbindern (2a, 2b, 2c) ausgebildet sind, und
- mindestens einen Abgriffelementkörper (6a, 6b), wobei die Spannungsabgriffelemente (4) und der mindestens eine Abgriffelementkörper (6a, 6b) zur Anordnung aneinander und zur Sicherung gegen Lösen voneinander ausgebildet sind,
- wobei das mindestens eine Zellverbinderelement (3a, 3b) mit den Zellverbindern (2a, 2b, 2c) und der mindestens eine Abgriffelementkörper (6a, 6b) mit den Spannungsabgriffelementen (4) zur mechanischen Verbindung miteinander ausgebildet sind,
- wobei die Spannungsabgriffelemente (4) und der mindestens eine Abgriffelementkörper (6a, 6b) verschieden sind,
- wobei die Spannungsabgriffelemente (4) und der mindestens eine Abgriffelementkörper (6a, 6b) zur Schnappverbindung miteinander ausgebildet sind.

2. Zellverbinderaufbau (1) nach Anspruch 1,
- wobei die Zellverbinder (2a, 2b, 2c) und das mindestens eine Zellverbinderelement (3a, 3b) zur räumlich getrennten Positionierung der Zellverbinder (2a, 2b, 2c) an dem mindestens einen Zellverbinderelement (3a, 3b) und zur Positionssicherung der positionierten Zellverbinder (2a, 2b, 2c) ausgebildet sind, und/oder
- wobei die Spannungsabgriffelemente (4) und der mindestens eine Abgriffelementkörper (6a, 6b) zur räumlich getrennten Positionierung der Spannungsabgriffelemente (4) an dem mindestens einen Abgriffelementkörper (6a, 6b) und zur Positionssicherung der positionierten Spannungsabgriffelemente (4) ausgebildet sind.

3. Zellverbinderaufbau (1) nach einem der vorhergehenden Ansprüche,
- wobei Kabelenden (5E) der Spannungsabgriffkabel (5) zueinander fest räumlich angeordnet sind, insbesondere mittels mindestens eines Steckverbinders (8) und/oder wobei die Spannungsabgriffkabel (5) teilweise oder vollständig mindestens ein Flachbandkabel (9) bilden.

4. Zellverbinderaufbau (1) nach einem der vorhergehenden Ansprüche,
- wobei der Zellverbinderaufbau (1) ein vorderseitiges Zellverbinderelement (3a), ein rückseitiges Zellverbinderelement (3b), mindestens einen vorderseitigen Abgriffelementkörper (6a) und mindestens einen rückseitigen Abgriffelementkörper (6b) aufweist, wobei das vorderseitige Zellverbinderelement (3a) und der mindestens eine vorderseitige Abgriffelementkörper (6a) zur mechanischen Verbindung miteinander ausgebildet sind, wobei das rückseitige Zellverbinderelement (3b) und der mindestens eine rückseitige Abgriffelementkörper (6b) zur mechanischen Verbindung miteinander ausgebildet sind und wobei das vorderseitige Zellverbinderelement (3a) und das rückseitige Zellverbinderelement (3b) verschieden zur Vermeidung einer seitenfalschen Verbindung und/oder der mindestens eine vorderseitige Abgriffelementkörper (6a) und der mindestens eine rückseitige Abgriffelementkörper (6b) verschieden zur Vermeidung einer seitenfalschen Verbindung ausgebildet sind, und/oder
- wobei ein Spannungsabgriffkabel (5') länger als ein anderes Spannungsabgriffkabel (5", 5‴) zur Vermeidung einer falschen Anordnung eines entfernten Spannungsabgriffelements (4`) und eines nahen Spannungsabgriffelements (4") an dem Abgriffelementkörper (6a, 6b) oder zur Vermeidung einer falschen Verbindung eines entfernten Abgriffelementkörpers (6a', 6b') und eines nahen Abgriffelementkörpers (6a‴, 6b‴) mit dem Zellverbinderelement (3a, 3b) ausgebildet ist.

5. Zellverbinderaufbau (1) nach einem der vorhergehenden Ansprüche,
- wobei die Zellverbinder (2a, 2b, 2c) Zellverbinderbleche sind, und/oder
- wobei die Spannungsabgriffelemente (4) Kontaktzungen (7) aufweisen.

6. Zellverbinderaufbau (1) nach einem der vorhergehenden Ansprüche,
- wobei die Zellverbinder (2a, 2b, 2c) und/oder das mindestens eine Zellverbinderelement (3a, 3b) und/oder die Spannungsabgriffelemente (4) und/oder der mindestens eine Abgriffelementkörper (6a, 6b) derart ausgebildet sind/ist, insbesondere der Abgriffelementkörper (6a, 6b) Aussparungen (12), insbesondere Fenster, für mindestens Teile (7) der Spannungsabgriffelemente (4) aufweist, dass bei mechanischer Verbindung des mindestens einen Zellverbinderelements (3a, 3b) mit den Zellverbindern (2a, 2b, 2c) und des mindestens einen Abgriffelementkörpers (6a, 6b) mit den Spannungsabgriffelementen (4) die Spannungsabgriffelemente (4) mindestens teilweise über den Zellverbindern (2a, 2b, 2c) in einer Richtung (z, -z) von außen nach innen angeordnet sind und von außen für eine, insbesondere stoffschlüssige, Verbindung, insbesondere eine Schweißverbindung, mit den Zellverbindern (2a, 2b, 2c) zugänglich sind.

7. Zellverbinderaufbau (1) nach einem der vorhergehenden Ansprüche,
- wobei das mindestens eine Zellverbinderelement (3a, 3b) und/oder die Zellverbinder (2a, 2b, 2c) zur, insbesondere formschlüssigen, Sicherung der Spannungsabgriffelemente (4) gegen Lösen von dem Abgriffelementkörper (6a, 6b) bei mechanischer Verbindung des Zellverbinderelements (3a, 3b) mit den Zellverbindern (2a, 2b, 2c) und des Abgriffelementkörpers (6a, 6b) mit den Spannungsabgriffelementen (4) ausgebildet sind/ist.

8. Zellverbinderaufbau (1) nach einem der vorhergehenden Ansprüche,
- wobei das mindestens eine Zellverbinderelement (3a, 3b) zum Halten von Akkumulatorzellen (114a, 114b, 114c), insbesondere Rundzellen, an mindestens einer Zellseite, insbesondere einer Zellumfangsseite (ZUS), ausgebildet ist,
- wobei die Zellverbinder (2a, 2b, 2c) an dem Zellverbinderelement (3a, 3b) im Bereich der Akkumulatorzellen (114a, 114b, 114c) beim Halten der Akkumulatorzellen (114a, 114b, 114c) gesichert sind und/oder
- wobei der mindestens eine Abgriffelementkörper (6a, 6b) mit dem Zellverbinderelement (3a, 3b) im Bereich der Akkumulatorzellen (114a, 114b, 114c) beim Halten der Akkumulatorzellen (114a, 114b, 114c) mechanisch verbunden ist.

9. Zellverbinderaufbau (1) nach einem der vorhergehenden Ansprüche,
- wobei das mindestens eine Zellverbinderelement (3a, 3b) zur Anordnung von Akkumulatorzellen (114a, 114b, 114c), insbesondere Rundzellen, in einer Richtung (-z, z) von innen nach außen auf einer Innenseite (3aIS, 3bIS) des Zellverbinderelements (3a, 3b) ausgebildet ist, und
- wobei das mindestens eine Zellverbinderelement (3a, 3b) zur Anordnung der Zellverbinder (2a, 2b, 2c) und/oder des mindestens einen Abgriffelementkörpers (6a, 6b) mit den Spannungsabgriffelementen (4) in einer Richtung (z, -z) von außen nach innen auf einer der Innenseite (3aIS, 3bIS) gegenüberliegenden Außenseite (3aAS, 3bAS) des Zellverbinderelements (3a, 3b) ausgebildet ist.

10. Zellverbinderaufbau (1) nach einem der vorhergehenden Ansprüche,
- wobei die Zellverbinder (2a, 2b, 2c) einstückig und/oder elektrisch leitend ausgebildet sind, und/oder
- wobei das mindestens eine Zellverbinderelement (3a, 3b) einstückig und/oder elektrisch isolierend ausgebildet ist, und/oder
- wobei die Spannungsabgriffelemente (4) einstückig und/oder elektrisch leitend ausgebildet sind, und/oder
- wobei der mindestens eine Abgriffelementkörper (6a ,6b) einstückig und/oder elektrisch isolierend ausgebildet ist.

11. Zellverbinderaufbau (1) nach einem der vorhergehenden Ansprüche,
- wobei die Zellverbinder (2a, 2b, 2c) und das mindestens eine Zellverbinderelement (3a, 3b) zur formschlüssigen Verbindung, insbesondere Schnappverbindung, miteinander ausgebildet sind, und/oder
- wobei das mindestens eine Zellverbinderelement (3a, 3b) mit den Zellverbindern (2a, 2b, 2c) und der mindestens eine Abgriffelementkörper (6a, 6b) mit den Spannungsabgriffelementen (4) zur formschlüssigen Verbindung, insbesondere Schnappverbindung, miteinander ausgebildet sind.

12. Zellverbinderaufbau (1) nach einem der vorhergehenden Ansprüche,
- wobei der Zellverbinderaufbau (1) mindestens ein weiteres Kabel (14), insbesondere ein Temperatursensor-Kabel, aufweist,
- wobei das mindestens eine weitere Kabel (14) und das mindestens eine Zellverbinderelement (3a) zur Anordnung aneinander ausgebildet sind, und
- wobei das mindestens eine Zellverbinderelement (3a) und der mindestens eine Abgriffelementkörper (6a) zur, insbesondere formschlüssigen, Sicherung des angeordneten mindestens einen weiteren Kabels (14) gegen Lösen von dem Zellverbinderelement (3a) bei mechanischer Verbindung des Zellverbinderelements (3a) und des Abgriffelementkörpers (6a) ausgebildet sind.

13. Akkupack (111) zur Versorgung eines elektrisch angetriebenen Garten- und/oder Forstbearbeitungsgeräts (101) mit elektrischer Antriebsleistung (AL), wobei der Akkupack (111) aufweist:
- einen Zellverbinderaufbau (1) nach einem der vorhergehenden Ansprüche, und
- Akkumulatorzellen (114a, 114b, 114c), insbesondere Rundzellen.

14. Akkupack (111) nach Anspruch 13,
- wobei der Akkupack (111) einen Messelektronikteil (115) aufweist, wobei der Messelektronikteil (115) zur elektrischen Verbindung mit den Akkumulatorzellen (114a, 114b, 114c) mittels der Zellverbinder (2a, 2b, 2c) und der Spannungsabgriffelemente (4) zur Messung von Spannungen (SP) von den Akkumulatorzellen (114a, 114b, 114c) ausgebildet ist.

15. Garten- und/oder Forstbearbeitungssystem (100), wobei das Garten- und/oder Forstbearbeitungssystem (100) aufweist:
- einen Akkupack (111) nach Anspruch 13 oder 14, und
- ein elektrisch angetriebenes Garten- und/oder Forstbearbeitungsgerät (101),
- wobei der Akkupack (111) und das elektrisch angetriebene Garten- und/oder Forstbearbeitungsgerät (101) zur elektrischen Verbindung miteinander zur Versorgung des elektrisch angetriebenen Garten- und/oder Forstbearbeitungsgeräts (101) mit elektrischer Antriebsleistung (AL) von dem Akkupack (111) ausgebildet sind.

## Claims

1. Cell connector structure (1) for a rechargeable battery pack (111) for supplying electrical drive power (AL) to an electrically driven gardening and/or forestry work appliance (101), wherein the cell connector structure (1) has:
- a plurality of cell connectors (2a, 2b, 2c), wherein the cell connectors (2a, 2b, 2c) are designed for electrically connecting rechargeable battery cells (114a, 114b, 114c),
- at least one cell connector element (3a, 3b), wherein the cell connectors (2a, 2b, 2c) and the at least one cell connector element (3a, 3b) are designed for being arranged on one another and for being secured against becoming detached from one another,
- a plurality of voltage tap elements (4), wherein the voltage tap elements (4) have voltage tap cables (5), wherein the voltage tap cables (5) are designed for being electrically connected to the cell connectors (2a, 2b, 2c), and
- at least one tap element body (6a, 6b), wherein the voltage tap elements (4) and the at least one tap element body (6a, 6b) are designed for being arranged on another and for being secured against becoming detached from one another,
- wherein the at least one cell connector element (3a, 3b) with the cell connectors (2a, 2b, 2c) and the at least one tap element body (6a, 6b) with the voltage tap elements (4) are designed for being mechanically connected to one another,
- wherein the voltage tap elements (4) and the at least one tap element body (6a, 6b) are different,
- wherein the voltage tap elements (4) and the at least one tap element body (6a, 6b) are designed for being connected to one another with a snap action.

2. Cell connector structure (1) according to Claim 1,
- wherein the cell connectors (2a, 2b, 2c) and the at least one cell connector element (3a, 3b) are designed for positioning the cell connectors (2a, 2b, 2c) on the at least one cell connector element (3a, 3b) in a spatially separated manner and for securing the position of the positioned cell connectors (2a, 2b, 2c), and/or
- wherein the voltage tap elements (4) and the at least one tap element body (6a, 6b) are designed for positioning the voltage tap elements (4) on the at least one tap element body (6a, 6b) in a spatially separated manner and for securing the position of the positioned voltage tap elements (4).

3. Cell connector structure (1) according to either of the preceding claims,
- wherein cable ends (5E) of the voltage tap cables (5) are arranged spatially fixedly in relation to one another, in particular by means of at least one plug-in connector (8), and/or wherein the voltage tap cables (5), in part or completely, form at least one flat ribbon cable (9).

4. Cell connector structure (1) according to one of the preceding claims,
- wherein the cell connector structure (1) has a front-side cell connector element (3a), a rear-side cell connector element (3b), at least one front-side tap element body (6a) and at least one rear-side tap element body (6b), wherein the front-side cell connector element (3a) and the at least one front-side tap element body (6a) are designed for being mechanically connected to one another, wherein the rear-side cell connector element (3b) and the at least one rear-side tap element body (6b) are designed for being mechanically connected to one another, and wherein the front-side cell connector element (3a) and the rear-side cell connector element (3b) are designed differently for avoiding connection on the incorrect side, and/or the at least one front-side tap element body (6a) and the at least one rear-side tap element body (6b) are designed differently for avoiding connection on the incorrect side, and/or
- wherein a voltage tap cable (5') is designed to be longer than another voltage tap cable (5'', 5‴) for avoiding incorrect arrangement of a removed voltage tap element (4') and a nearby voltage tap element (4") on the tap element body (6a, 6b) or for avoiding incorrect connection of a removed tap element body (6a', 6b') and a nearby tap element body (6a‴, 6b‴) to the cell connector element (3a, 3b).

5. Cell connector structure (1) according to one of the preceding claims,
- wherein the cell connectors (2a, 2b, 2c) are metal cell connector sheets, and/or
- wherein the voltage tap elements (4) have contact tongues (7).

6. Cell connector structure (1) according to one of the preceding claims,
- wherein the cell connectors (2a, 2b, 2c) and/or the at least one cell connector element (3a, 3b) and/or the voltage tap elements (4) and/or the at least one tap element body (6a, 6b) are designed in such a way, in particular the tap element body (6a, 6b) has cutouts (12), in particular windows, for at least parts (7) of the voltage tap elements (4), that, when the at least one cell connector element (3a, 3b) is mechanically connected to the cell connectors (2a, 2b, 2c) and the at least one tap element body (6a, 6b) is mechanically connected to the voltage tap elements (4), the voltage tap elements (4) are arranged at least partially over the cell connectors (2a, 2b, 2c) in a direction (z, -z) from the outside to the inside and are accessible from the outside for an, in particular cohesive, connection, in particular a welded connection, to the cell connectors (2a, 2b, 2c).

7. Cell connector structure (1) according to one of the preceding claims,
- wherein the at least one cell connector element (3a, 3b) and/or the cell connectors (2a, 2b, 2c) are designed for securing, in particular in an interlocking manner, the voltage tap elements (4) against becoming detached from the tap element body (6a, 6b) when the cell connector element (3a, 3b) is mechanically connected to the cell connectors (2a, 2b, 2c) and the tap element body (6a, 6b) is mechanically connected to the voltage tap elements (4).

8. Cell connector structure (1) according to one of the preceding claims,
- wherein the at least one cell connector element (3a, 3b) is designed for holding rechargeable battery cells (114a, 114b, 114c), in particular round cells, on at least one cell side, in particular a cell circumferential side (ZUS),
- wherein the cell connectors (2a, 2b, 2c) are secured to the cell connector element (3a, 3b) in the region of the rechargeable battery cells (114a, 114b, 114c) when the rechargeable battery cells (114a, 114b, 114c) are held, and/or
- wherein the at least one tap element body (6a, 6b) is mechanically connected to the cell connector element (3a, 3b) in the region of the rechargeable battery cells (114a, 114b, 114c) when the rechargeable battery cells (114a, 114b, 114c) are held.

9. Cell connector structure (1) according to one of the preceding claims,
- wherein the at least one cell connector element (3a, 3b) is designed for arranging rechargeable battery cells (114a, 114b, 114c), in particular round cells, in a direction (-z, z) from the inside to the outside on an inner side (3aIS, 3bIS) of the cell connector element (3a, 3b), and
- wherein the at least one cell connector element (3a, 3b) is designed for arranging the cell connectors (2a, 2b, 2c) and/or the at least one tap element body (6a, 6b) with the voltage tap elements (4) in a direction (z, -z) from the outside to the inside on an outer side (3aAS, 3bAS) of the cell connector element (3a, 3b), which outer side is situated opposite the inner side (3aIS,3bIS).

10. Cell connector structure (1) according to one of the preceding claims,
- wherein the cell connectors (2a, 2b, 2c) are designed in one piece and/or in an electrically conductive manner, and/or
- wherein the at least one cell connector element (3a, 3b) is designed in one piece and/or in an electrically insulating manner, and/or
- wherein the voltage tap elements (4) are designed in one piece and/or in an electrically conductive manner, and/or
- wherein the at least one tap element body (6a, 6b) is designed in one piece and/or in an electrically insulating manner.

11. Cell connector structure (1) according to one of the preceding claims,
- wherein the cell connectors (2a, 2b, 2c) and the at least one cell connector element (3a, 3b) are designed for being connected to one another in an interlocking manner, in particular with a snap action, and/or
- wherein the at least one cell connector element (3a, 3b) with the cell connectors (2a, 2b, 2c) and the at least one tap element body (6a, 6b) with the voltage tap elements (4) are designed for being connected to one another in an interlocking manner, in particular with a snap action.

12. Cell connector structure (1) according to one of the preceding claims,
- wherein the cell connector structure (1) has at least one further cable (14), in particular a temperature sensor cable,
- wherein the at least one further cable (14) and the at least one cell connector element (3a) are designed for being arranged on one another, and
- wherein the at least one cell connector element (3a) and the at least one tap element body (6a) are designed for securing, in particular in an interlocking manner, the provided at least one further cable (14) against becoming detached from the cell connector element (3a) when the cell connector element (3a) and the tap element body (6a) are mechanically connected.

13. Rechargeable battery pack (111) for supplying electrical drive power (AL) to an electrically driven gardening and/or forestry work appliance (101), wherein the rechargeable battery pack (111) has:
- a cell connector structure (1) according to one of the preceding claims, and
- rechargeable battery cells (114a, 114b, 114c), in particular round cells.

14. Rechargeable battery pack (111) according to Claim 13,
- wherein the rechargeable battery pack (111) has a measurement electronics part (115), wherein the measurement electronics part (115) is designed for being electrically connected to the rechargeable battery cells (114a, 114b, 114c) by means of the cell connectors (2a, 2b, 2c) and the voltage tap elements (4) for measuring voltages (SP) of the rechargeable battery cells (114a, 114b, 114c).

15. Gardening and/or forestry work system (100), wherein the gardening and/or forestry work system (100) has:
- a rechargeable battery pack (111) according to Claim 13 or 14, and
- an electrically driven gardening and/or forestry work appliance (101),
- wherein a rechargeable battery pack (111) and the electrically driven gardening and/or forestry work appliance (101) are designed for being electrically connected to one another for supplying electrical drive power (AL) from the rechargeable battery pack (111) to the electrically driven gardening and/or forestry work appliance (101).

## Revendications

1. Structure (1) de connexion de cellules pour un bloc d'accumulateurs (111) destiné à alimenter en puissance d'entraînement électrique (AL) un outil de jardinage et/ou de travail forestier (101) à entraînement électrique, la structure (1) de connexion de cellules comprenant :
- une pluralité de connecteurs de cellules (2a, 2b, 2c), les connecteurs de cellules (2a, 2b, 2c) étant conçus pour connecter électriquement des cellules d'accumulateurs (114a, 114b, 114c),
- au moins un élément (3a, 3b) de connexion de cellules, les connecteurs de cellules (2a, 2b, 2c) et ledit au moins un élément (3a, 3b) de connexion de cellules étant conçus de façon à être placés les uns contre l'autre et pour être empêchés de se détacher les uns avec d'autre,
- une pluralité d'éléments (4) de collecte de tension, les éléments (4) de collecte de tension comprenant des câbles (5) de collecte de tension, les câbles (5) de collecte de tension étant adaptés pour être connectés électriquement aux connecteurs de cellules (2a, 2b, 2c), et
- au moins un corps (6a, 6b) d'élément de collecte, les éléments (4) de collecte de tension et ledit au moins un corps (6a, 6b) d'élément de collecte étant adaptés de façon à être placés l'un contre l'autre et à être empêchés de se détacher l'un de l'autre,
- ledit au moins un élément (3a, 3b) de connexion de cellules avec les connecteurs de cellules (2a, 2b, 2c) et ledit au moins un corps (6a, 6b) d'élément de collecte avec les éléments (4) de collecte de tension étant formés pour une connexion mécanique les uns aux autres,
- les éléments (4) de collecte de tension et ledit au moins un corps (6a, 6b) d'élément de collecte étant différents,
- les éléments (4) de collecte de tension et ledit au moins un corps (6a, 6b) d'élément de collecte étant conçus pour être reliés entre eux par encliquetage.

2. Structure (1) de connexion de cellules selon la revendication 1,
- dans lequel les connecteurs de cellules (2a, 2b, 2c) et ledit au moins un élément (3a, 3b) de connexion de cellules sont conçus pour un positionnement spatialement séparé des connecteurs de cellules (2a, 2b, 2c) sur ledit au moins un élément (3a, 3b) de connexion de cellules et pour la sécurisation de la position des connecteurs de cellules (2a, 2b, 2c) positionnés, et/ou
- les éléments (4) de collecte de tension et ledit au moins un corps (6a, 6b) d'élément de collecte étant conçus pour un positionnement spatialement séparé des éléments (4) de collecte de tension sur ledit au moins un corps (6a, 6b) d'élément de collecte et pour la sécurisation de la position des éléments (4) de collecte de tension positionnés.

3. Structure (1) de connexion de cellules selon l'une des revendications précédentes,
- dans lequel les extrémités de câble (5E) des câbles (5) de collecte de tension sont disposées de manière fixe dans l'espace les unes par rapport aux autres, notamment au moyen d'au moins un connecteur (8) et/ou dans lequel les câbles (5) de collecte de tension forment partiellement ou entièrement au moins un câble plat (9).

4. Structure (1) de connexion de cellules selon l'une des revendications précédentes,
- dans lequel la structure (1) de connexion de cellules comprend un élément avant (3a) de connexion de cellules, un élément arrière (3b) de connexion de cellules, au moins un corps avant (6a) d'élément de collecte et au moins un corps arrière (6b) d'élément de collecte, l'élément avant (3a) de connexion de cellules et ledit au moins un corps avant (6a) d'élément de collecte étant conçus de façon à être reliés mécaniquement l'un à l'autre, l'élément arrière (3b) de connexion de cellules et ledit au moins un corps arrière (6b) d'élément de collecte étant formés pour une connexion mécanique l'un avec l'autre, et l'élément avant (3a) de connexion de cellules et l'élément arrière (3b) de connexion de cellules étant formés différemment de façon à éviter une connexion latérale incorrecte et/ou ledit au moins un corps avant (6a) d'élément de collecte et ledit au moins un corps arrière (6b) d'élément de collecte étant formés différemment de façon à éviter une connexion latérale incorrecte, et/ou
- un câble de collecte de tension (5') étant plus long qu'un autre câble de collecte de tension (5", 5‴) de façon à éviter une disposition incorrecte d'un élément éloigné (4') de collecte de tension et d'un élément proche (4'') de collecte de tension sur le corps (6a, 6b) d'élément de collecte ou à éviter une mauvaise connexion d'un corps éloigné (6a', 6b') d'élément de collecte et d'un corps proche (6a''', 6b''') d'élément de collecte à l'élément (3a, 3b) de connexion de cellules.

5. Structure (1) de connexion de cellules selon l'une des revendications précédentes,
- dans lequel les connecteurs de cellules (2a, 2b, 2c) sont des plaques de connexion de cellules, et/ou
- dans lequel les éléments (4) de collecte de tension comprennent des languettes de contact (7).

6. Structure (1) de connexion de cellules selon l'une des revendications précédentes,
- dans lequel les connecteurs de cellules (2a, 2b, 2c) et/ou ledit au moins un élément (3a, 3b) de connexion de cellules et/ou les éléments (4) de collecte de tension et/ou ledit au moins un corps (6a, 6b) d'élément de collecte sont/est conçu(s) de telle sorte que, notamment, le corps (6a, 6b) d'élément de collecte présente des évidements (12), notamment des fenêtres, pour au moins des parties (7) des éléments (4) de collecte de tension, de sorte que, lors de la liaison mécanique dudit au moins un élément (3a, 3b) de connexion de cellules avec les connecteurs de cellules (2a, 2b, 2c) et dudit au moins un corps (6a, 6b) d'élément de collecte avec les éléments (4) de collecte de tension, les éléments (4) de collecte de tension sont disposés au moins partiellement au-dessus des connecteurs de cellules (2a, 2b, 2c) dans une direction (z, -z) allant de l'extérieur vers l'intérieur et sont accessibles de l'extérieur pour une liaison, notamment une liaison par matière, notamment une liaison soudée, avec les connecteurs de cellules (2a, 2b, 2c).

7. Structure (1) de connexion de cellules selon l'une des revendications précédentes,
- dans lequel ledit au moins un élément (3a, 3b) de connexion de cellules et/ou les connecteurs de cellules (2a, 2b, 2c) sont/est conçu(s) pour sécuriser, notamment par complémentarité de forme, les éléments (4) de collecte de tension contre un détachement du corps (6a, 6b) d'élément de collecte lors d'une liaison mécanique de l'élément (3a, 3b) de connexion de cellules avec les connecteurs de cellules (2a, 2b, 2c) et du corps (6a, 6b) d'élément de collecte avec les éléments (4) de collecte de tension.

8. Structure (1) de connexion de cellules selon l'une des revendications précédentes,
- dans lequel ledit au moins un élément (3a, 3b) de connexion de cellules est conçu de façon à maintenir des cellules d'accumulateurs (114a, 114b, 114c), notamment des cellules rondes, sur au moins un côté de cellule, notamment un côté périphérique de cellule (ZUS),
- les connecteurs de cellules (2a, 2b, 2c) sont bloqués sur l'élément (3a, 3b) de connexion de cellules dans la zone des cellules d'accumulateurs (114a, 114b, 114c) lors du maintien des cellules d'accumulateurs (114a, 114b, 114c) et/ou
- ledit au moins un corps (6a, 6b) d'élément de collecte étant relié mécaniquement à l'élément (3a, 3b) de connexion de cellules dans la zone des cellules d'accumulateurs (114a, 114b, 114c) lors du maintien des cellules d'accumulateurs (114a, 114b, 114c).

9. Structure (1) de connexion de cellules selon l'une des revendications précédentes,
- dans lequel ledit au moins un élément (3a, 3b) de connexion de cellules est conçu de façon à disposer des cellules d'accumulateurs (114a, 114b, 114c), notamment des cellules rondes, dans une direction (-z, z) allant de l'intérieur vers l'extérieur sur une face intérieure (3aIS, 3bIS) de l'élément (3a, 3b) de connexion de cellules, et
- dans lequel ledit au moins un élément (3a, 3b) de connexion de cellules est formé de façon à disposer lesdits connecteurs de cellules (2a, 2b, 2c) et/ou ledit au moins un corps (6a, 6b) d'élément de collecte avec lesdits éléments (4) de collecte de tension dans une direction (z, -z) allant de l'extérieur vers l'intérieur sur un côté extérieur (3aAS, 3bAS) dudit élément (3a, 3b) de connexion de cellules opposé audit côté intérieur (3aIS, 3bIS).

10. Structure (1) de connexion de cellules selon l'une des revendications précédentes,
- dans lequel les connecteurs de cellules (2a, 2b, 2c) sont formés d'une seule pièce et/ou sont électriquement conducteurs, et/ou
- ledit au moins un élément (3a, 3b) de connexion de cellules est réalisé d'un seul tenant et/ou électriquement isolant, et/ou
- les éléments (4) de collecte de tension sont formés d'une seule pièce et/ou sont électriquement conducteurs, et/ou
- ledit au moins un corps (6a, 6b) d'élément de collecte est formé d'une seule pièce et/ou électriquement isolant.

11. Structure (1) de connexion de cellules selon l'une des revendications précédentes,
- dans lequel les connecteurs de cellules (2a, 2b, 2c) et ledit au moins un élément (3a, 3b) de connexion de cellules sont conçus de façon à être reliés entre eux par complémentarité de forme, notamment par encliquetage, et/ou
- ledit au moins un élément (3a, 3b) de connexion de cellules est réalisé avec les connecteurs de cellules (2a, 2b, 2c) et ledit au moins un corps (6a, 6b) d'élément de collecte est réalisé avec les éléments (4) de collecte de tension pour une liaison par complémentarité de forme, notamment une liaison par encliquetage.

12. Structure (1) de connexion de cellules selon l'une des revendications précédentes,
- dans lequel la structure (1) de connexion de cellules comprend au moins un autre câble (14), notamment un câble de capteur de température,
- dans lequel ledit au moins un autre câble (14) et ledit au moins un élément de connexion de cellules (3a) sont conçus de façon à être disposés l'un contre l'autre, et
- ledit au moins un élément (3a) de connexion de cellules et ledit au moins un corps (6a) d'élément de collecte étant conçus de façon à sécuriser, notamment par complémentarité de forme, ledit au moins un autre câble (14) disposé contre une séparation d'avec l'élément (3a) de connexion de cellules lors d'une connexion mécanique de l'élément de connexion de cellules (3a) et du corps d'élément de collecte (6a).

13. Bloc d'accumulateurs (111) pour l'alimentation en puissance d'entraînement électrique (AL) d'un outil de jardinage et/ou de travail forestier (101) à entraînement électrique, le bloc d'accumulateurs (111) présentant :
- une structure (1) de connexion de cellules selon l'une des revendications précédentes, et
- des cellules d'accumulateurs (114a, 114b, 114c), notamment des cellules rondes.

14. Bloc d'accumulateurs (111) selon la revendication 13,
- dans lequel le bloc d'accumulateurs (111) comprend une partie électronique de mesure (115), la partie électronique de mesure (115) étant conçue de façon à être reliée électriquement aux cellules d'accumulateurs (114a, 114b, 114c) au moyen des connecteurs de cellules (2a, 2b, 2c) et des éléments (4) de collecte de tension pour mesurer des tensions (SP) provenant des cellules d'accumulateurs (114a, 114b, 114c).

15. Système de jardinage et/ou de travail forestier (100), le système de jardinage et/ou de travail forestier (100) comprenant :
- un bloc d'accumulateurs (111) selon la revendication 13 ou la revendication 14, et
- un outil de jardinage et/ou de travail forestier (101) à entraînement électrique,
- le bloc d'accumulateurs (111) et l'outil de jardinage et/ou de travail forestier à entraînement électrique (101) étant conçus de façon à être connectés électriquement l'un à l'autre afin d'alimenter l'outil de jardinage et/ou de travail forestier à entraînement électrique (101) avec une puissance d'entraînement électrique (AL) provenant du bloc d'accumulateurs (111).
